# EUROPÄISCHE PATENTSCHRIFT

(11) **EP 3 099 535 B1**
(45) Veröffentlichungstag und Bekanntmachung des Hinweises auf die Patenterteilung: **07.11.2018**
(21) Anmeldenummer: 15705189.7
(22) Anmeldetag: 28.01.2015
(51) Int. Cl.: B60R 21/239

(54) **GASSACK UND VERFAHREN ZUM BETRIEB EINES FAHRZEUGINSASSENSCHUTZSYSTEMS**
AIRBAG AND METHOD FOR OPERATING A VEHICLE OCCUPANT PROTECTION SYSTEM
COUSSIN GONFLABLE ET PROCÉDÉ POUR FAIRE FONCTIONNER UN SYSTÈME DE PROTECTION DES OCCUPANTS D'UN VÉHICULE

(30) Priorität: 30.01.2014 DE 102014001084
(43) Veröffentlichungstag der Anmeldung: 07.12.2016
(73) Patentinhaber: TRW Automotive GmbH, 73553 Alfdorf (DE)
(72) Erfinder: ARANZULLA, Daniele, 73457 Essingen (DE); BURKHARDTSMAIER, Martin, 73529 Schwäbisch Gmünd (DE)
(74) Vertreter: ZF TRW Patentabteilung
(86) Internationale Anmeldenummer: PCT/EP2015/000153
(87) Internationale Veröffentlichungsnummer: WO 2015/113756

(56) Entgegenhaltungen:
- EP-A1- 2 048 040
- DE-A1-102007 058 656

## Beschreibung

Die Erfindung betrifft einen Gassack mit wenigstens einer in einem Gassackmantel vorgesehenen Öffnung, an die ein Verschlusselement angesetzt ist. Außerdem betrifft die Erfindung ein Verfahren zum Betrieb eines Fahrzeuginsassenschutzsystems.

Ein derartiger Gassack ist beispielsweise in der DE 10 2007 058 656 A1 beschrieben, wo ein Ausströmöffnungen aufweisendes Verschlusselement so an die Öffnung im Gassackmantel angesetzt ist, dass es eine nach außen und nach innen stülpbare Erweiterung der Gassackwand bildet. Das Verschlusselement ist mit einem Fangband verbunden und kann darüber in das Innere des Gassacks gezogen werden, um die Ausströmöffnungen zu verschließen. Zum Öffnen der Ausströmöffnungen wird das Verschlusselement durch den Gasdruck nach außen gedrückt.

Auch die EP 1 418 093 B1 zeigt einen Gassack mit einem aus dem Gassack herausstülpbaren Verschlusselement, wobei das Verschlusselement hier als schmaler Schlauch mit einer endseitigen Ausströmöffnung ausgebildet ist. Das Schlauchende ist standardmäßig in das Innere des Gassackmantels hineingezogen und über ein Fangband mit einer Freigabevorrichtung verbunden. Vor der Betätigung der Freigabevorrichtung wird das Verschlusselement durch den Innendruck im Gassack an die Innenwand des Gassackmantels gedrückt, und die Ausströmöffnung ist geschlossen. Nach Betätigung der Freigabevorrichtung wird das Verschlusselement aufgrund des Gassackinnendrucks aus dem Gassackmantel herausgestülpt, und das Gas kann durch die Ausströmöffnung abströmen. Nachteilig ist dabei unter anderem, das nur eine geringe Gasmenge den langen, engen Schlauch passieren kann, was eine schnelle Entlüftung erschwert.

Die EP 2 048 040 A1 zeigt zudem einen Gassack bei dem ein Verschlusselement über eine Freigabevorrichtung abhängig von insassenbezogenen Daten in eine geöffnete Stellung gebracht werden kann.

Die vorliegende Erfindung schlägt Verbesserungen für das im oben beschriebene Konzept zur Entlüftung eines Gassacks vor.

Aufgabe der Erfindung ist es zum einen, ein ansteuerbares Verschlusselement bereitzustellen, mit dem eine schnelle Entlüftung des Gassacks möglich ist, wenn dies gewünscht ist.

Erfindungsgemäß wird dies mit einem Gassack mit den Merkmalen vom Anspruch 1 erreicht. Solange sich das Verschlusselement in der geschlossenen Stellung befindet, kann im Wesentlichen kein Gas durch die Öffnung aus dem Gassack abströmen. Ein Gasaustritt erfolgt erst, wenn das Verschlusselement eine geöffnete Stellung einnimmt. Die Gasabflussmenge kann auf diese Weise durch die Querschnittsfläche der Öffnung im Gassackmantel beeinflusst werden.

Durch die Entfaltung des Gassacks baut sich in einer bevorzugten Ausführungsform ein Zug auf das Fangband auf, der das Verschlusselement im Inneren des Gassacks in der geschlossenen Stellung hält oder in das Innere des Gassacks in die geschlossene Stellung zieht und der bewirkt, dass das Verschlusselement die Öffnung durch eine abdichtende Falte zumindest weitgehend verschließt.

Die Öffnung im Gassackmantel kann daher relativ groß gewählt werden, da es möglich ist, sie durch das nach innen gezogene, durch das Fangband auf Zug gehaltene Verschlusselement auch im voll aufgeblasenen Gassack beim Eintauchen eines Fahrzeuginsassen dicht genug verschlossen zu halten.

Erfindungsgemäß ist das Fangband an einer Freigabevorrichtung fixiert, die situationsbedingt das Fangband freigibt, wodurch das Verschlusselement in eine geöffnete Stellung gelangt.

Eine optimale Krafteinwirkung auf das Verschlusselement lässt sich beispielsweise dadurch erreichen, dass an der Innenseite des Gassackmantels wenigstens zwei Umlenkungen für das Fangband zwischen der Freigabevorrichtung und dem Verschlusselement vorgesehen sind, insbesondere wenn die Freigabevorrichtung in der Nähe des Gasgenerators angeordnet ist. Auf diese Weise können in allen Entfaltungszuständen des Gassacks Zugkräfte auf das Verschlusselement übertragen werden. Genauso kann so sichergestellt werden, dass sich das Fangband bei Betätigen der Freigabevorrichtung so löst, dass der Zug auf das Verschlusselement wegfällt.

Die Freigabevorrichtung ist eine aktiv angesteuerte Vorrichtung, die mit einer Steuereinheit gekoppelt ist, die ein Lösen des Fangbands in Abhängigkeit von insassen- und/oder fahrzeugbezogenen Parametern veranlasst. Bei den Parametern kann es sich beispielsweise um eine aktuelle Position des Fahrzeuginsassen handeln, darum, ob ein Kindersitz auf dem Sitz vor dem Gassack platziert ist, um das Gewicht des Fahrzeuginsassen, die Position des Sitzes, die Größe des Fahrzeuginsassen, die Zeit ab der Auslösung des Gassacksystems oder auch die Unfallschwere.

Der Moment der Freigabe des Fangbands und damit des Bewegens des Verschlusselements in die geöffnete Stellung und der Zeitpunkt, ab dem Gas aus dem Gassack austritt, ist durch den Aktivierungszeitpunkt der Freigabevorrichtung exakt bestimmt und frei wählbar.

Die Freigabeeinrichtung umfasst eine pyrotechnische Auslöseeinheit, diese kann insbesondere durch einen Sprengbolzen gebildet sein. Vorzugsweise ist die Freigabeeinrichtung im Bereich des Gasgenerators angeordnet, der den Gassack mit Füllgas versorgt, wobei eine Steuereinheit, die den Gasgenerator aktiviert, auch zur Aktivierung der Freigabevorrichtung genutzt werden kann.

Aus der der geschlossenen Stellung kann sich das Verschlusselement in die geöffnete Stellung (oder umgekehrt) vorzugsweise im Wesentlichen in etwa senkrecht zu dem Bereich des Gassackmantels bewegen, der die Öffnung umgibt.

Das Verschlusselement in der nach außen gestülpten geöffneten Stellung, insbesondere bei aufgeblasenem Gassack, hat bevorzugt eine sich verjüngende Hohlkörperform, insbesondere eine Kegelform, Hütchenform oder Trichterform, sodass das Verschlusselement dem aus dem Gassackinneren durch die Öffnung austretenden Gas möglichst wenig Widerstand entgegensetzt.

Bevorzugt weist das Verschlusselement wenigstens eine, vorteilhaft zwei, seitliche Ausströmöffnungen auf, sodass ein schneller Abfluss einer großen Gasmenge erreichbar ist und der Gassack in kurzer Zeit entlüftet werden kann.

In einer möglichen Ausführungsform liegt das Verschlusselement in einer anfänglichen Entfaltungsphase des Gassacks in seiner geschlossenen Stellung innen im Gassackmantel.

Wird die Freigabevorrichtung betätigt, so kann sich das Verschlusselement aufgrund des Gassackinnendrucks aus dem Gassack in die geöffnete Stellung herausstülpen, wenn das Fangband von seiner Befestigung gelöst wird, wobei sich insbesondere die Ausströmöffnung öffnet.

Diese Anordnung erlaubt es, den Gassack mit dem Verschlusselement in der geschlossenen Stellung sehr schnell zu befüllen und gegebenenfalls gezielt zum Zeitpunkt des Eintauchens des Fahrzeuginsassen in den Gassack oder beim Auftreffen auf ein Hindernis ein Ausströmen von Gas durch die Öffnung zuzulassen, um ein weiches Auffangen zu ermöglichen.

Erkennen Sensoren eine Situation, bei der der Gassack von Anfang an weicher sein soll, beispielsweise das Vorhandensein eines Kindersitzes oder eines Fahrzeuginsassen in einer ungünstigen Stellung, so kann die Freigabevorrichtung direkt mit der Zündung des Gasgenerators bereits zu Beginn des Aufblasens des Gassacks aktiviert werden, sodass von Anfang an Gas ausströmen kann und sich der Gassack langsamer und/oder nicht mit der normalen Härte füllt.

In einer anderen Ausführungsform ist das Verschlusselement in einer anfänglichen Entfaltungsphase des Gassacks in seiner geöffneten Stellung zumindest teilweise außerhalb des Gassackmantels, und die Ausströmöffnung ist von Anfang an offen. In diesem Fall wird durch den sich während des Aufblasens erhöhenden Zug auf das Fangband das Verschlusselement nach und nach ins Innere des Gassackmantels hineingezogen, bis es sich gefaltet vorzugsweise an die Innenseite des Gassackmantels anlegt.

Es ist möglich, die Länge des Fangbands und die Geometrie des Gassacks so einzustellen, dass die Öffnung erst bei vollständig entfaltetem Gassack geschlossen ist. Trifft der Gassack während der Entfaltung auf ein Hindernis, beispielsweise einen ungünstig platzierten Fahrzeuginsassen oder einen Kindersitz, so bleibt die Öffnung geöffnet und ein Teil des Gases entweicht. Entfaltet sich der Gassack jedoch planmäßig, ohne auf ein Hindernis zu treffen, so wird durch das Fangband das Verschlusselement in die geschlossene Stellung gezogen und die Öffnung verschlossen. Der Gassack entfaltet sich zu seinem maximalen Volumen und erreicht seinen maximalen Innendruck, sodass ein Fahrzeuginsasse optimal aufgefangen werden kann.

Um zu verhindern, dass sich die Öffnung beim Eintauchen eines Insassen durch den Druckanstieg im Gassack ungewollt wieder öffnet, kann eine Verriegelungsstruktur am Fangband vorgesehen sein, die ab einem vorbestimmten Entfaltungszustand des Gassacks eine Rückbewegung des Verschlusselements verhindert.

Um einen klein verpackbaren Gassack zu schaffen sowie die Ausströmöffnung im geschlossenen Zustand möglichst dicht verschlossen zu halten, kann ein Umfangsrand des Verschlusselements umlaufend um den Rand der Öffnung so befestigt sein, dass der Rand der Öffnung eine umfangsmäßig umlaufende Blende bildet, die radial über den Umfangsrand des Verschlusselements nach innen vorsteht.

Der Gassack kann beispielsweise wie oben beschrieben ausgebildet sein und auch so wie oben beschrieben eingesetzt werden.

Der Umfangsrand des Verschlusselements ist vorzugsweise umlaufend ohne Unterbrechung und mit radialem Abstand zum Rand der Öffnung befestigt. Auf diese Weise bildet der Rand der Öffnung bis zur Umfangsnaht, mit der das Verschlusselement am Gassackmantel befestigt ist, eine Blende zwischen dem Verschlusselement und dem Inneren des Gassacks. Diese Blende unterstützt die Gewebelagen des Verschlusselements und dichtet das Verschlusselement im geschlossenen Zustand, in dem das Verschlusselement im Inneren des Gassacks liegt, seitlich ab.

Die Blende bleibt vorzugsweise zumindest weitgehend gegenüber dem Verschlusselement beweglich, sodass das Verschlusselement auch bei hohem Gasdruck den Rand der Öffnung nicht übermäßig verzerren kann. Daher steht stets der gesamte Querschnitt der Öffnung für den Austritt von Gas aus dem Gassack in das Verschlusselement zur Verfügung.

Bei der Verwendung gleicher Verschlusselemente kann durch eine Variation der Fläche der Ausströmöffnung die Gasabströmung einfach angepasst werden.

Es ist natürlich auch möglich, als Blende ein separates, ringförmiges Gewebestück um den Rand der Öffnung vorzusehen, wobei dann die Öffnung durch das Gewebestück definiert ist.

Die Querschnittsfläche der Öffnung ist vorzugsweise in etwa rautenförmig, da sich gezeigt hat, dass sich so eine flache Faltung des Gassacks erzielen lässt.

Der Umfangsrand des Verschlusselements liegt vorzugsweise nicht in einer Ebene, sondern ist so geformt, dass er annähernd dieselbe Form wie die Öffnung im Gassackmantel hat, wenn das Verschlusselement am Gassackmantel befestigt ist. Diese Form reduziert bzw. verhindert Einschnürungen an der Blende.

Erfindungsgemäß weist das Verschlusselement wenigstens zwei übereinanderliegende, entlang eines Umfangsrands miteinander verbundene Zuschnittsabschnitte auf und wenigstens einer der Zuschnittsabschnitte weist eine oder mehrere abgenähte Falten auf und/oder ist aus mehreren Zuschnittsteilen mit wenigstens einer Bogennaht zusammengesetzt, sodass der Zuschnittsabschnitt nicht flach ausbreitbar ist.

Es ist möglich, beide der Zuschnittsabschnitte auf diese Weise auszubilden. Es hat sich jedoch herausgestellt, dass bereits eine ausreichende Stabilität erreicht wird, wenn der zweite Zuschnittsabschnitt aus einem einstückigen, flach ausbreitbaren Gewebeabschnitt gebildet ist.

Die nicht flache, also gewölbt vorgeformte Form des einen Zuschnittsabschnitts sorgt für eine Verkürzung der Öffnungszeit der Ausströmöffnung, also für eine Verkürzung der Zeit, die das Verschlusselement braucht, um sich aus dem Gassackmantel heraus aus der geschlossenen Stellung in seine geöffnete Stellung auszustülpen und bewirkt eine Stabilisierung der Form des Verschlusselements in der geöffneten Stellung.

Eine besonders geeignete Form für das Verschlusselement ergibt sich, wenn jeder der Zuschnittsabschnitte einen Teilbereich aufweist, der sich vom Umfangsrand in die Fläche des Zuschnittsabschnitts erstreckt, wobei sich die beiden Teilbereiche bei verschlossener Ausströmöffnung zu einer Fläche ergänzen, die in ihrer Form der Querschnittsfläche der Öffnung im Gassackmantel entspricht.

Es ist günstig, eine Form zu wählen, die es erlaubt, das Verschlusselement insgesamt so zu falten, dass sich aus Teilbereichen der beiden Zuschnittsabschnitte eine geschlossene flache Fläche ergibt, die in ihrer Form der Öffnung im Gassackmantel entspricht, aber etwas größer ist, sodass sie flach auf den Gassackmantel über der Öffnung aufgenäht werden kann. Auf diese Weise werden Zugkräfte auf den Rand der Öffnung verhindert, die die Öffnung verformen könnten. Dies sorgt dafür, dass in allen Entfaltungsstadien des Gassacks die Ausströmung vom Gas vom Inneren des Gassackmantels in das Verschlusselement gleichbleibend ist. Eventuell in diesem Teilbereich liegende Abnäher oder Rüschen sollten so ausgelegt sein, dass sie sich in die flache Fläche einfügen. Gleiches gilt bei der Verwendung von Bogennähten, die so ausgebildet sein sollten, dass sich in dem Teilbereich eine flach ausbreitbare Fläche ergibt.

Das Verschlusselement kann beispielsweise aus zwei übereinanderliegenden Zuschnittsabschnitten bestehen, die jeweils etwa keulen- oder glockenförmig gestaltet sind. An einem langgestreckten Ende jedes der Zuschnittsabschnitte setzt ein Fangband an, während an dem dem langgestreckten Ende gegenüberliegenden Umfangsrand der jeweilige Zuschnittsabschnitt am Gassackmantel befestigt ist. Die Zuschnittsabschnitte sind miteinander am langgestreckten Ende verbunden sowie jeweils an einem Abschnitt im Bereich des Umfangsrands, vorzugsweise durch Vernähen, wobei die Zuschnittsabschnitte über einen Großteil der zwischen dem langgestreckten Ende und dem Umfangsrand liegenden Seitenränder nicht verbunden sind, sodass zwei seitliche Ausströmöffnungen im Verschlusselement gebildet sind. Die Verbindung der Zuschnittsabschnitte erfolgt vorzugsweise an einer Stelle, wo die Seitenränder auf den Umfangsrand des jeweiligen Zuschnittsabschnitts treffen, sodass der Umfangsrand einen geschlossenen Ring bildet.

Die Verbindung der Zuschnittsabschnitte am Umfangsrand kann auch durch eine Umfangsnaht erfolgen, die erst bei der Befestigung des Verschlusselements am Rand der Öffnung im Gassack hergestellt wird, sodass vorher die Zuschnittsabschnitte im Bereich des Umfangsrads nicht fest miteinander verbunden sind.

Es ist im Wesentlichen ausreichend, wenn die beiden Zuschnittsabschnitte an drei Stellen verbunden sind, nämlich am langgestreckten Ende sowie an den beiden am weitesten seitlich außen liegenden Bereichen ihres Umfangsrands. Auf diese Weise können im Wesentlichen die gesamten Seitenränder zwischen dem Umfangsrand und dem langgestreckten Ende als Ausströmöffnung dienen, was einen hohen Gasfluss erlaubt. Außerdem werden die Zahl der Nähte und die Länge der Nähte insgesamt gering gehalten.

An den Stellen, an denen die Umfangsrandabschnitte der beiden Zuschnittsabschnitte aneinandergrenzen, ist vorzugsweise ein Materialüberschuss vorgesehen, der eine Überlappung des Umfangsrandabschnitte erlaubt.

Die Überlappung kann im Wesentlichen durch einen kurzen Vorsprung der Umfangsränder gebildet sein.

Es ist aber auch möglich, an jedem freien Ende des Umfangsrandabschnitts im Bereich der späteren Schmalseiten des Verschlusselements einen überstehenden Gewebelappen vorzusehen, der so gefaltet werden kann, dass sich ein durchgehender, umlaufender Umfangsrand ergibt.

Hierzu kann das Verschlusselement zwei Zuschnittsabschnitte aufweisen, die jeweils einen Umfangsrandabschnitt umfassen, wobei an jedem freien Ende der Umfangsrandabschnitte ein Gewebelappen ausgebildet ist, der durch einen Einschnitt teilweise vom jeweiligen Zuschnittsabschnitt abgeteilt ist.

Die Gewebelappen sind beispielsweise entlang von zwei nebeneinander angeordneten radialen Faltlinien gegenüber der Fläche des jeweiligen Zuschnittsabschnitts abgeklappt, sodass ein in einer Ebene umlaufender Umfangsrand gebildet ist.

Der Einschnitt in der Fläche des Zuschnittsabschnitts erlaubt es, den jeweiligen Gewebelappen gegenüber der Fläche des Zuschnittsabschnitts abzuklappen. Durch das Falten entlang von zwei nebeneinanderliegenden, radial ausgerichteten Faltlinien kann so aus einer kompakten Zuschnittsform durch einfache Faltvorgänge eine stabiler, in einer Ebene umlaufenden Umfangsrand gebildet werden, an dem das Verschlusselement z.B. auch durch einen automatisierten Nähprozess am Gassack befestigt werden kann.

Um den Nähprozess zu automatisieren, sind vorzugsweise am Umfangsrand, insbesondere im Bereich der Gewebelappen, radial vom Umfangsrand abstehende Sensorlaschen vorgesehen, die eine automatisierte Positionserkennung ermöglichen und so z.B. eine CNC-Nähoperation zulassen.

Es ist möglich, zwei separate Zuschnittsabschnitte zu verwenden. Die beiden Zuschnittsabschnitte können aber an ihren langgestreckten Enden auch einstückig miteinander verbunden sein.

Zur Befestigung des Fangbands ist am Verschlusselement vorzugsweise eine Schlaufe vorgesehen, an der das Fangband angreift. Hierzu können beispielsweise die beiden Zuschnittsabschnitte zu einer Gewebeschlaufe vernäht sein, durch die eine Kordel hindurchgezogen ist. Dies bietet sich vor allem an, wenn die beiden Zuschnittsabschnitte einstückig miteinander ausgebildet sind.

Der Begriff "Fangband" ist nicht auf flache Bänder beschränkt, sondern umfasst alle flexiblen zugübertragende, langgestreckte Körper.

Es ist auch möglich, eine Kordel oder eine Gewebeschlaufe jeweils mit dem langgestreckten Ende entweder beider Zuschnittsabschnitte oder jeweils eines Zuschnittsabschnitts zu vernähen, sodass sich eine Schlaufe ergibt.

Der Vorteil der Verwendung einer zusätzlichen Schlaufe gegenüber dem festen Vernähen des Fangbands direkt am Verschlusselement liegt darin, dass sich eine bessere Kraftverteilung einstellen kann, wenn sich das Fangband gegenüber dem Verschlusselement ausrichten kann.

Außerdem erfüllt die Erfindung auch die Aufgabe, einen verbesserten Fahrzeuginsassenschutz zu bieten.

Dies wird durch ein erfindungsgemäßen Verfahren zum Betrieb eines Fahrzeuginsassenschutzsystems erreicht, wobei das Fahrzeuginsassenschutzsystem einen Gassack aufweist, wie er oben beschrieben wurde. Die mit der Freigabevorrichtung gekoppelte Steuereinheit kann das Lösen des Fangbands bereits zu Beginn des Entfaltungsvorgangs veranlassen, wenn eine mit der Steuereinheit verbundene Sensorik vorbestimmte insassen- und/oder fahrzeugbezogene Parameter erkennt. Hier sind besonders Parameter relevant, die auf ein Hindernis im Entfaltungsweg des Gassacks schließen lassen.

Diese Aufgabe wird auch mit einem Verfahren zum Betrieb eines Fahrzeuginsassenschutzsystems gelöst, das mit einem oben beschriebenen Gassack bestückt ist, wobei in einem anfänglichen Entfaltungszustand des Gassacks das Verschlusselement in seiner geöffneten Stellung ist und mit zunehmender Entfaltung des Gassacks das Verschlusselement in das Innere des Gassackmantels in die geschlossene Stellung hineingezogen wird. Auf das Fangband wird über dessen Fixierung ab einem vorbestimmten Entfaltungszustand des Gassacks ein ausreichender Zug auf das Verschlusselement ausgeübt, um dieses in der geschlossenen Stellung zu halten. Die Freigabevorrichtung kann in Abhängigkeit von vorbestimmten insassen- und/oder fahrzeugbezogenen Parametern das Fangband lösen, sodass das Verschlusselement durch den Innendruck des Gassacks wieder in die geöffnete Stellung bewegt wird. In diesem Fall erfolgt grundsätzlich eine Gasabströmung durch die Öffnung, wenn der Gassack auf ein Hindernis trifft, auch ohne dass die Freigabevorrichtung ausgelöst wird. Entfaltet sich der Gassack jedoch planmäßig, so wird die Gasabströmung im Verlauf des Entfaltens gestoppt. Soll aber der Gassack beim Aufprall des Insassen eine geringere als die maximale Härte aufweisen, beispielsweise weil Sensoren eine entsprechende Position oder ein entsprechendes Gewicht des Fahrzeuginsassen festgestellt haben, so wird die Freigabevorrichtung zum geeigneten Zeitpunkt aktiviert und das Fangband gelöst, sodass wieder eine Gasabströmung erfolgt.

Sämtliche beschriebenen Merkmale der einzelnen Ausführungsformen lassen sich im Ermessen des Fachmanns gegeneinander austauschen oder miteinander kombinieren.

Die Erfindung wird nachfolgend anhand mehrerer Ausführungsbeispiele mit Bezug auf die beigefügten Zeichnungen näher beschrieben. In den Zeichnungen zeigen:
- - Figur 1 einen erfindungsgemäßen Gassack gemäß einer ersten Ausführungsform in einer schematischen Draufsicht, wobei das Verschlusselement in der geschlossenen Stellung ist;
- - Figur 2 den Gassack aus Figur 1 in einer schematischen Schnittansicht entlang der Linie II-II in Figur 1;
- - Figur 3 den Gassack aus Figur 1 in einer schematischen Draufsicht, wobei das Verschlusselement in einer geöffneten Stellung ist;
- - Figur 4 den Gassack aus Figur 3 in einer schematischen Schnittansicht entlang der Linie IV-IV in Figur 3;
- - Figur 5 das Verschlusselement des Gassacks aus Figur 3 in einer schematischen perspektivischen Ansicht;
- - Figur 6 einen erfindungsgemäßen Gassack gemäß einer zweiten Ausführungsform in einer schematischen Draufsicht, wobei das Verschlusselement in der geöffneten Stellung ist;
- - Figur 7 eine schematische Schnittansicht des Gassacks aus Figur 6 entlang der Linie VII-VII in Figur 6;
- - Figur 8 eine schematische Draufsicht des Gassacks aus Figur 6 während des Schließens der Ausströmöffnung und der Arretierung des Verriegelungselements;
- - Figur 9 eine schematische perspektivische Darstellung der Arretierung des Verriegelungselements des Gassacks aus Figur 8;
- - Figur 10 eine schematische Schnittansicht des Gassacks in Figur 8 entlang der Linie X-X in Figur 8;
- - Figur 11 eine schematische Ansicht des Gassacks aus Figur 6 mit geschlossener Ausströmöffnung und arretiertem Fangband;
- - Figur 12 eine schematische Schnittansicht des Gassacks aus Figur 11 entlang der Linie XII-XII in Figur 11;
- - Figur 13 einen erfindungsgemäßen Gassack gemäß einer dritten Ausführungsform in einer schematischen Schnittansicht mit geöffneter Ausströmöffnung beim Auftreffen auf einen Fahrzeuginsassen;
- - Figur 14 den Gassack aus Figur 13 mit geöffneter Ausströmöffnung beim Auftreffen auf einen Kindersitz;
- - Figur 15 den Gassack aus Figur 13 im voll aufgeblasenen Zustand mit geschlossener Ausströmöffnung vor dem Eintauchen des Fahrzeuginsassen;
- - Figur 16 den Gassack aus Figur 15 beim Eintauchen des Insassen mit geöffneter Ausströmöffnung;
- - Figur 17 eine schematische Draufsicht auf einen Ausschnitt eines erfindungsgemäßen Gassacks von der Außenseite des Gassackmantels mit einem Verschlusselement in geschlossener Stellung;
- - Figur 18 eine schematische Ansicht eines Verschlusselements für den Gassack aus Figur 17;
- - Figur 19 eine mögliche Gestaltung eines Zuschnitts des Verschlusselements aus Figur 17, bei dem zwei Zuschnittsabschnitte einstückig miteinander verbunden sind;
- - Figuren 20 und 21 eine mögliche Gestaltung der Zuschnittsabschnitte eines Verschlusselements des Gassacks aus Figur 17, bei dem die beiden Zuschnittsabschnitte als separate Teile ausgebildet sind;
- -Figur 22 eine weitere Gestaltung des Zuschnitts eines Verschlusselements eines Gassacks aus Figur 17, bei der einer der Zuschnittsabschnitte aus drei Teilen zusammengesetzt ist, die jeweils mit Bogennähten verbunden sind;
- - Figur 23 eine weitere Gestaltung eines Zuschnitts eines Verschlusselements des Gassacks aus Figur 17, bei dem einer der Zuschnittsabschnitte aus drei Teilen zusammengesetzt ist, die jeweils mittels Bogennähten verbunden sind, wobei die beiden Zuschnittsabschnitte getrennte Teile bilden;
- - Figur 24 eine weitere Gestaltung eines Zuschnitts eines Verschlusselements des Gassacks aus Figur 17, bei dem einer der Zuschnittsabschnitte aus zwei Teilen zusammengesetzt ist, die mit Bogennähten verbunden sind;
- - Figur 25 eine schematische Darstellung der Befestigung des Fangbands am Verschlusselement, bei der das Fangband mit beiden Zuschnittsabschnitten vernäht ist;
- - Figur 26 das Detail XXVI aus Figur 25;
- - Figur 27 eine schematische Darstellung der Befestigung des Fangbands am Verschlusselement, bei der das Fangband einzeln an jedem der Zuschnittsabschnitte befestigt ist;
- Figur 28 eine schematische Draufsicht auf einen erfindungsgemäßen Gassack mit einem Verschlusselement gemäß einer weiteren Ausführungsform;
- Figur 29 eine schematische perspektivische Darstellung des Verschlusselements aus Figur 28;
- Figur 30 eine schematische Darstellung eines flach ausgebreiteten Zuschnitts des Verschlusselements aus Figur 29;
- Figur 31 ein vergrößertes Detail aus Figur 30;
- Figur 32 einen ersten Faltschritt bei der Befestigung des Verschlusselements am Mantel des Gassacks;
- Figur 33 einen zweiten Faltschritt;
- Figuren 34 bis 36 Details weiterer Faltschritte;
- Figuren 37 bis 40 die in den Figuren 33 bis 36 gezeigten Faltschritte in einer anderen Darstellung;
- Figur 41 das Verschlusselement direkt vor der Befestigung am Gassackmantel; und
- Figur 42 das am Gassackmantel befestigte Verschlusselement.

Aus Gründen der Übersichtlichkeit werden in den Figuren dieselben Bezugszeichen für alle Ausführungsformen verwendet, sofern sich Teile nicht deutlich gegenüber einer vorherigen Ausführungsform unterscheiden. In diesem Fall erhält das jeweilige Teil eine um jeweils 100 erhöhte Nummer.

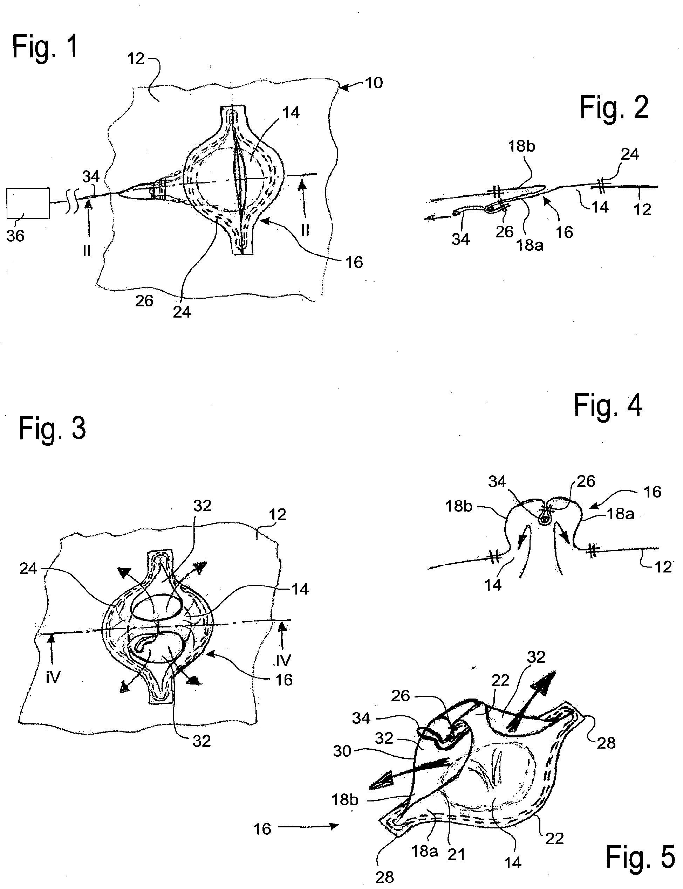

Die Figuren 1 bis 5 zeigen einen Gassack 10 gemäß einer ersten Ausführungsform.

Vom Gassack 10 ist in den Figuren nur ein Ausschnitt eines Gassackmantels 12 dargestellt, der im Wesentlichen den Innenraum des Gassacks 10 umschließt.

Im Gassackmantel 12 ist eine Öffnung 14 ausgebildet, die von einem separaten, mit dem Gassackmantel 12 vernähten Verschlusselement 16 überdeckt ist. Die gesamte Öffnung 14 im Gassackmantel 12 ist vom Verschlusselement 16 bedeckt, wie in Figur 1 zu erkennen ist.

Anstelle des Vernähens kann in der gesamten Anmeldung auch eine andere geeignete Befestigungsart verwendet werden, beispielsweise Schweißen, Kleben oder einstückiges Weben. Der Begriff "nähen" oder "Nähte" wird hier nur aus Gründen der Übersichtlichkeit durchgehend verwendet.

Das Verschlusselement 16 ist näher in Figur 5 dargestellt. Es besteht hier aus zwei Zuschnittsabschnitten 18a, 18b, die jeweils einen von einem Umfangsrand 20 und zwei Seitenrändern 21 begrenzten Flächenbereich sowie gegenüber dem Umfangsrand 20 ein langgestrecktes Ende 22 aufweisen. In Draufsicht haben die Zuschnittsabschnitte 18a, 18b eine etwa Glocken- oder Keulenform.

Der Umfangsrand 20 jedes der Zuschnittsabschnitte 18a, 18b ist mittels einer Umfangsnaht 24 mit dem Gassackmantel 12 vernäht.

An den langgestreckten Enden 22 sind die beiden Zuschnittsabschnitte 18a, 18b miteinander mittels einer Naht 26 verbunden. In diesem Beispiel sind die beiden Zuschnittsabschnitte 18a, 18b außerdem noch an den beiden am weiten außen liegenden Randbereichen 28 miteinander vernäht (siehe Figur 5), sodass das Verschlusselement 16 insgesamt einen umlaufenden Umfangsrand hat. Abgesehen von diesen Verbindungen sind die Zuschnittsabschnitte 18a, 18b nicht aneinander fixiert, sodass das Verschlusselement 16 über der Öffnung 14 im Gassackmantel 12 vollständig offen ist. Ebenso sind die Seiten 21 zwischen dem Randbereich 28 und dem langgestreckten Ende 22 offen, sodass zwei große, seitliche, tropfenförmige Ausströmöffnungen 32 gebildet sind.

Das Verschlusselement 16 kann eine geschlossene Stellung annehmen, die in den Figuren 1 und 2 dargestellt ist, bei der es in das Innere des Gassackmantels 12 hineingefaltet ist und die Ausströmöffnungen 32 und damit die gesamte Öffnung 14 durch das gefaltete und zusammengelegte Verschlusselement 16 im Wesentlichen gasdicht verschlossen sind.

In der geöffneten Stellung, die in den Figuren 3 bis 5 gezeigt ist, ist das Verschlusselement hingegen nach außen aus dem Gassackmantel 12 herausgestülpt, sodass sich eine im Wesentlichen senkrecht zum Gassackmantel 12 in der Umgebung der Öffnung 14 senkrecht nach außen abstehende Wölbung ergibt. Das Verschlusselement 16 in seiner geöffneten Stellung gleicht einem sich nach außen verjüngenden Hohlkörper, der beispielsweise kegelförmig, trichterförmig oder hütchenförmig ist.

Um das Verschlusselement 16 in der geschlossenen Stellung zu halten oder es in die geschlossene Stellung zu bringen, ist an den langgestreckten Enden 22 der Zuschnittsabschnitte 18a, 18b des Verschlusselements 16 ein Fangband 34 angesetzt, das zumindest anfänglich fest im Gassack 10 fixiert ist.

Wird Zug auf das Fangband 34 ausgeübt, so bleibt das Verschlusselement 16 auch bei ansteigendem Gassackinnendruck im Inneren des Mantels 12 oder wird in diesen hineingezogen, wenn es sich in der geöffneten Stellung befindet. Der Zug auf das Fangband 34 bewirkt außerdem, dass der Gasdruck das Verschlusselement 16 nicht nach außen stülpt, sondern von innen gegen den Gassackmantel 12 drückt und so die Ausströmöffnung 32 verschließt oder verschlossen hält.

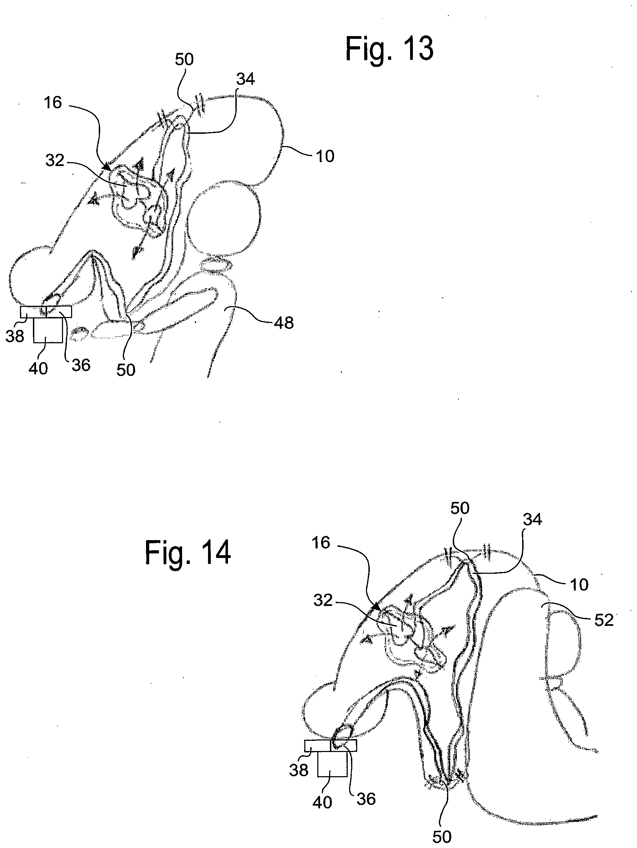

In der hier gezeigten Ausführungsform ist das Fangband 34 mit einer Freigabevorrichtung 36 verbunden, die beispielsweise am Gasgenerator 38 vorgesehen ist, der den Gassack 10 mit Füllgas versorgt (siehe schematisch in den Figuren 13 bis 16).

Die Freigabevorrichtung 36 ist so ausgebildet, dass sie das zunächst mit ihr verbundene Fangband 34 freigeben kann, sodass kein Zug mehr auf das Fangband 34 wirkt.

Erfindungsgemäß ist die Freigabevorrichtung 36 als pyrotechnische Vorrichtung ausgebildet, beispielsweise mit einem Sprengbolzen, wobei eine Zündung und damit eine Freigabe des Fangbands durch eine Steuereinheit 40 erfolgt (siehe Figur 13), die in vorbestimmten Situationen ein Auslösesignal an die Freigabevorrichtung 36 sendet.

In einem ersten möglichen Verfahren ist das Verschlusselement 16 in seiner geschlossenen Stellung im gefalteten Gassack 10 untergebracht. Das Fangband 34 ist so angeordnet und in seiner Länge so bemessen, dass zu Beginn der Entfaltung des Gassacks 10 ein genügender Zug auf das Fangband 34 wirkt, um das Verschlusselement 16 in der geschlossenen Stellung im Inneren des Gassackmantels 12 zu halten.

Bei einer normalen Entfaltung des Gassacks 10 bleibt das Verschlusselement 16 die gesamte Zeit in der geschlossenen Stellung, und die Ausströmöffnungen 32 bleiben verschlossen, sodass durch diese im Wesentlichen kein Gas aus dem Gassack 10 abströmt.

Eine (nicht dargestellte) Sensorik erfasst situationsbedingte, insassenbezogene und/oder fahrzeugbezogene Parameter wie etwa eine Sitzposition, Größe und Gewicht des Fahrzeuginsassen, eine aktuelle Position des Insassen, die seit dem Aktivieren des Gasgenerators verstrichenen Zeit oder eine Unfallschwere. Aufgrund eines oder mehrerer dieser Parameter kann die Steuereinheit 40 entscheiden, das Fangband 34 freizugeben, woraufhin der im Gassack 10 herrschende Innendruck das Verschlusselement 16 aus dem Gassackmantel 12 durch die Öffnung 14 herausstülpt und in seine geöffnete Stellung bringt, sodass Gas durch die Ausströmöffnungen 32 abströmen kann.

In dem Fall, dass beispielsweise eine ungünstige aktuelle Position des Fahrzeuginsassen erkannt wird, oder erkannt wird, dass ein Kindersitz auf dem Fahrzeugsitz montiert ist, gibt in diesem Beispiel die Freigabevorrichtung 36 das Fangband 34 direkt mit Beginn der Entfaltung des Gassacks 10 frei, sodass ein Teil des Füllgases permanent aus dem Gassack 10 abströmt.

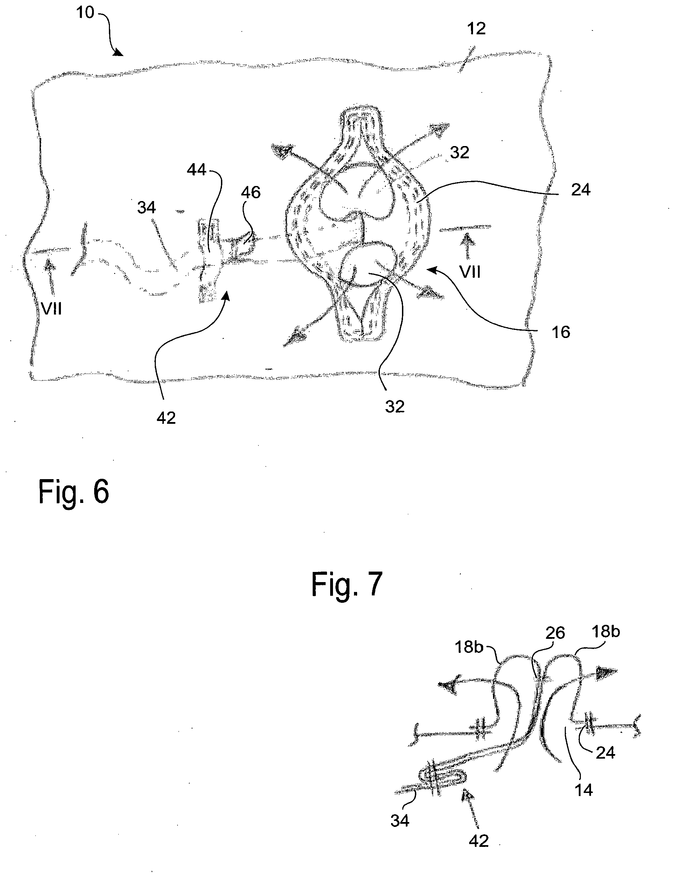

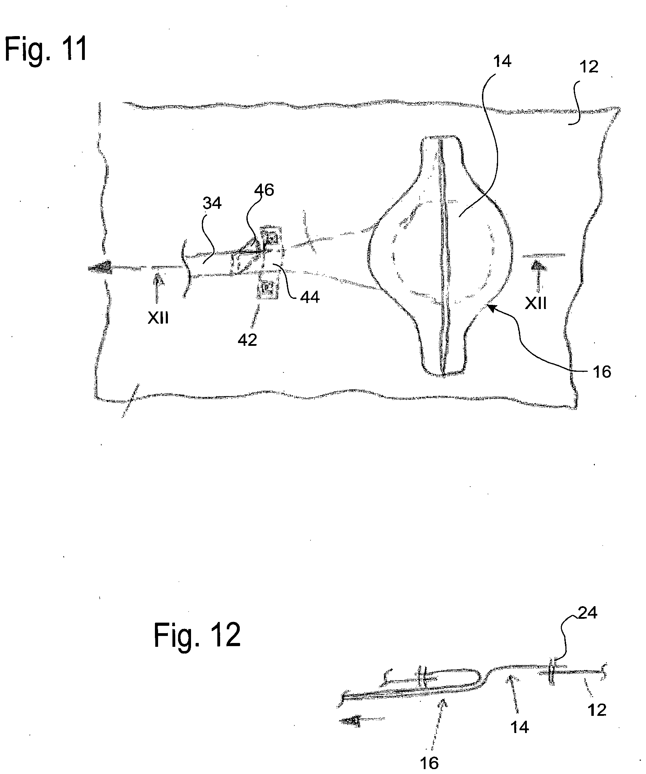

Die Figuren 6 bis 12 zeigen eine zweite Ausführungsform.

In diesem Fall ist vorgesehen, dass das Verschlusselement 16 im gefalteten Gassack 10 in seiner geöffneten Stellung ist, sodass es sich bereits zu Beginn der Entfaltung in der geöffneten Stellung befindet und die Ausströmöffnungen 32 freigegeben sind.

Bei fortschreitender Entfaltung des Gassacks 10 übt dieser durch seine Ausdehnung Zug auf das Fangband 34 aus und zieht dadurch das Verschlusselement 16 durch die Öffnung 14 in dessen geschlossene Stellung, in der die Ausströmöffnung 32 verschlossen ist. Im vollständig entfalteten Zustand ist hier die Ausströmöffnung 32 komplett verschlossen.

Trifft der Gassack 10 jedoch bei der anfänglichen Entfaltung auf ein Hindernis, so bleibt das Verschlusselement 16 in seiner geöffneten Stellung und die Ausströmöffnungen 32 bleiben geöffnet (siehe auch Ausführungsform den nach Figuren 13 bis 16).

Damit sich die Ausströmöffnung 32 beim Auffangen des Fahrzeuginsassen durch den Druckanstieg im Inneren des Gassacks 10 nicht unbeabsichtigt öffnet, ist in diesem Fall eine Verriegelungsstruktur 42 vorgesehen, die das Verschlusselement 16 in der geschlossenen Stellung hält.

Die Verriegelungsstruktur 42 besteht hier aus einer innen am Gassackmantel 12 angebrachten Lasche 44 sowie einem dazugehörigen Verrastelement 46 am Fangband 34. Das Verrastelement 46 ist hier einfach durch eine abgenähte Schlaufe des Fangbands 34 gebildet.

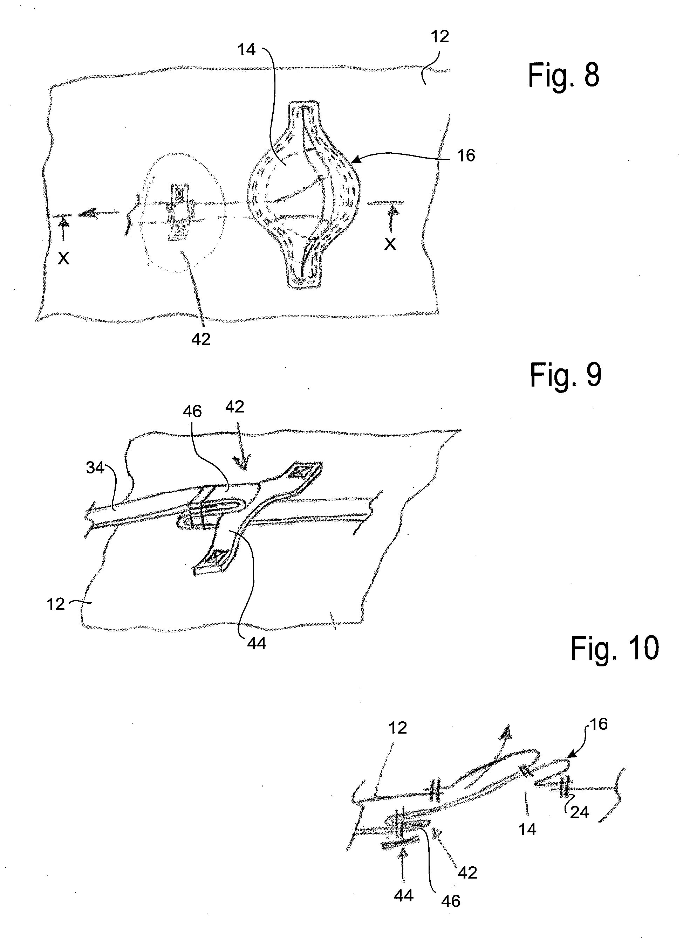

In Zugrichtung hin zum geschlossenen Zustand gleitet das Verrastelement 46 durch die Lasche 44, ohne dass eine nennenswert höhere Kraft ausgeübt werden müsste. Eine Rückbewegung ist jedoch unterbunden, da die abstehende Schlaufe des Verrastelements 46 sich an der Lasche 44 verhakt (siehe Figur 9).

Erfindungsgemäß wird das Fangband 34 an einer derartigen Freigabevorrichtung 36 befestigt, die in bestimmten Situationen das Fangband 34 freigibt, sodass sich das Verschlusselement 16 wieder in die geöffnete Stellung bewegen kann. In diesem Fall kann dann die Verriegelungsstruktur weggelassen werden oder so ausgelegt werden, dass sie bei Auslösen der Freigabevorrichtung außer Kraft gesetzt wird.

Eine solche Kombination ist in den Figuren 13 bis 16 dargestellt.

Figur 13 zeigt den Fall, wo ein Fahrzeuginsasse 48 sich in einer ungünstigen Position befindet, wenn der Gassack 10 sich entfaltet.

Das Verschlusselement 16 ist hier zu Beginn der Entfaltung des Gassacks 10 in seiner geöffneten Stellung, sodass die Ausströmöffnungen 32 freigegeben sind und offen sind. Beim Auftreffen des Gassacks 10 auf den Fahrzeuginsassen 48 ist über das Fangband 34 noch kein genügender Zug aufgebaut, um das Verschlusselement 16 zu bewegen. Das Verschlusselement 16 bleibt daher in seiner geöffneten Position. Das Gas kann aus dem Gassack durch die Ausströmöffnungen 32 abströmen, und der Gassack 10 bleibt relativ weich.

Das Fangband 34 wird hier an zwei Stellen zwischen den Befestigungsstellen an der Freigabevorrichtung 36 und dem Verschlusselement 16 am in der Figur oberen und unteren Ende des Gassacks 10 durch Umlenkungen 50 umgelenkt.

Figur 14 zeigt den Fall, in dem ein Kindersitz 52 auf dem Fahrzeugsitz montiert ist. Analog zu der gerade beschriebenen Situation bleibt der Gassack 10 über seine gesamte Entfaltungsdauer in einem Zustand, in dem das Verschlusselement 16 in der geöffneten Stellung ist und Gas über die Ausströmöffnungen 32 ausströmen kann.

In beiden Fällen spricht die Freigabevorrichtung 36 nicht an. Das Fangband bleibt über die gesamte Entfaltungsdauer des Gassacks 10 mit der Freigabevorrichtung 36 verbunden.

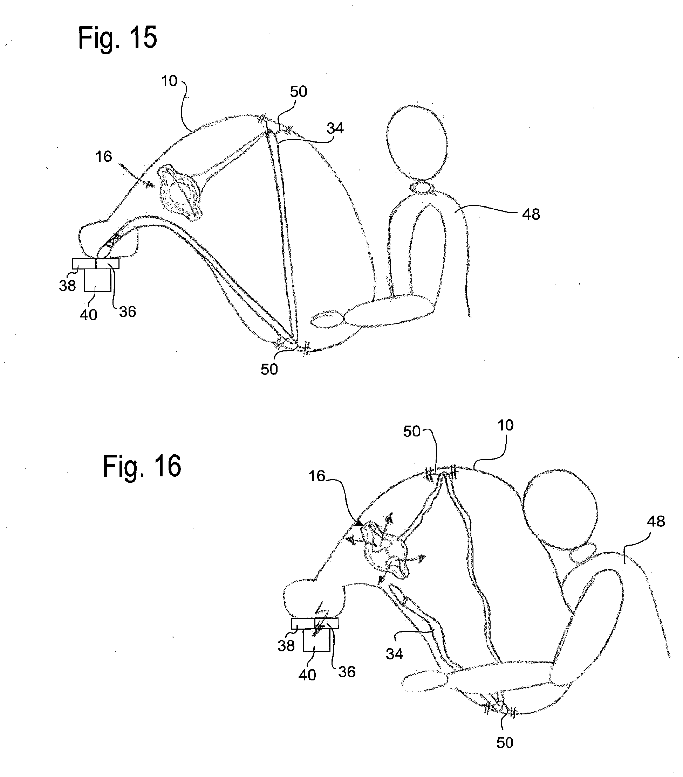

In Figur 15 ist der Fall dargestellt, in dem ein Fahrzeuginsasse 48 von einem komplett gefüllten Gassack 10 aufgefangen wird. Der Gassack 10 entfaltet sich wie vorgesehen zu seiner vollen Größe, ohne auf ein Hindernis zu treffen. Ab einem gewissen Entfaltungszustand beginnt Zug auf das Fangband 34 zu wirken, sodass das Verschlusselement 16 in die geschlossene Stellung gezogen wird und die Ausströmöffnungen 32 verschlossen werden.

Figur 16 zeigt den Fall, bei dem nach dem vollständigen Entfalten und Aufblasen des Gassacks 10 die Härte des Gassacks 10 verringert werden soll, beispielsweise bei einem kleinen, leichten und/oder nahe am Gassack sitzenden Fahrzeuginsassen 48. Hier wird, nachdem der Gassack 10 seinen vollständig entfalteten Zustand angenommen hat, die Freigabevorrichtung 36 aktiviert und das Fangband 34 gelöst. Durch den Gassackinnendruck, spätestens aber beim Eintauchen des Fahrzeuginsassen 48 in den Gassack 10, wird das Verschlusselement 16 durch die Öffnung 14 in seine geöffnete Stellung aus dem Gassackmantel 12 hinausgestülpt und die Ausströmöffnungen 32 geöffnet, sodass das Gas ausströmen kann.

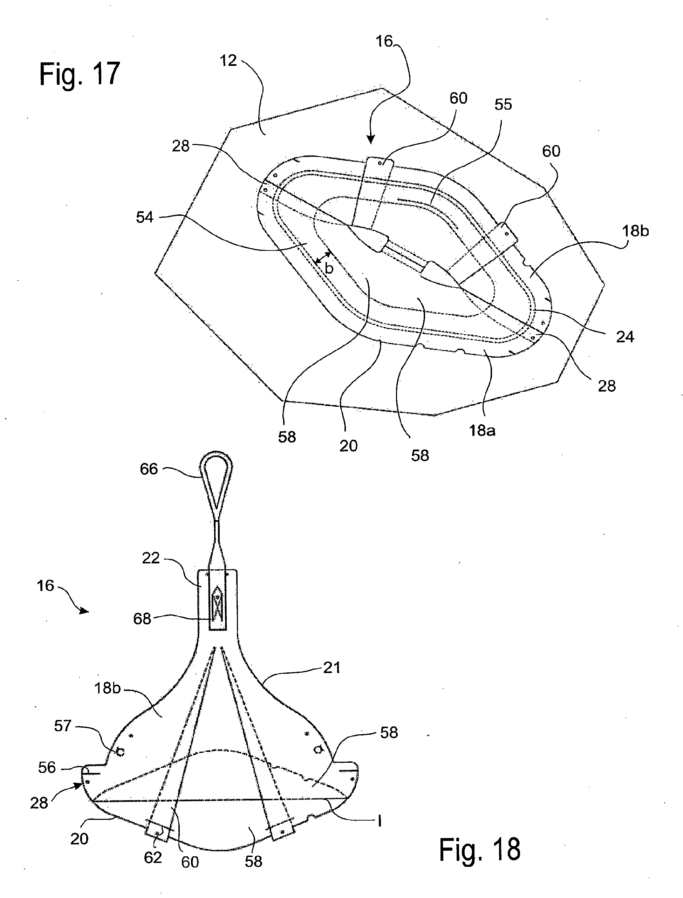

Die Figuren 17 bis 27 zeigen verschiedenen Varianten des Verschlusselements 16.

Figur 17 zeigt den Rand der Öffnung 14, in der Draufsicht verdeckt durch das darüberliegende Verschlusselement 16.

Bei den hier dargestellten Ausführungsformen ist die Öffnung 14 im Gassackmantel 12 jeweils rautenförmig mit abgerundeten Ecken ausgeführt.

Der Umfangsrand 20 des Verschlusselements 16 hat im Wesentlichen dieselbe Form, ist aber ein Stück größer.

Die Umfangsnaht 24, die den Umfangsrand 20 des Verschlusselements 16 mit dem Gassackmantel 12 verbindet, ist mit einem radialen Abstand b zum Innenrand der Öffnung 14 ausgeführt. Auf diese Weise entsteht zwischen der Umfangsnaht 24 und dem Rand der Öffnung 14 eine gegenüber dem Verschlusselement 16 im Wesentlichen bewegliche Blende 54, die radial über die Umfangsnaht 24 nach innen vorsteht. Es können eine oder mehrere Opfernähte 55 zusätzlich zur Umfangsnaht 24 vorgesehen sein.

Die Blende 54, die sich stets in etwa in Verlängerung des Gassackmantels 12 erstreckt, hat unter anderem die Funktion, im geschlossenen Zustand des Verschlusselements 16 eine Abdichtung zu schaffen.

Außerdem wird durch die Blende 54 eine direkte Krafteinwirkung auf den Rand der Öffnung 14 vermieden, weshalb die Öffnung 14 einen im Wesentlichen gleichbleibenden Querschnitt behält und damit stets ein reproduzierbarer Gasaustritt aus dem Gassackinneren in das Verschlusselement 16 erfolgt.

Die Rautenform von Öffnung 14 und Umfangsnaht 24 ermöglicht eine flache Packung der Gewebelagen des Gassacks 10.

Figur 18 zeigt das in Figur 17 dargestellte Verschlusselement 16 alleine.

Die langgestreckten Enden 22 der beiden Zuschnittsabschnitte 18a, 18b werden miteinander vernäht (siehe auch Figur 5). Außerdem werden die beiden Zuschnittsabschnitte 18a, 18b an den äußeren Bereichen 28 hier mittels jeweils einer Quernaht 56 sowie einer Knopfnaht 57 aneinander befestigt. Weitere Fixierungen und Verbindungen sind in diesem Beispiel nicht vorgesehen. Eine Fixierung der Umfangsränder 20 könnte auch erst bei der Befestigung des Verschlusselements 16 am Mantel 12 des Gassacks 10 durch die Umfangsnaht 24 erfolgen, ohne eine separate Verbindung der Zuschnittsabschnitte 18a, 18b am Umfangsrand 20 vorzusehen.

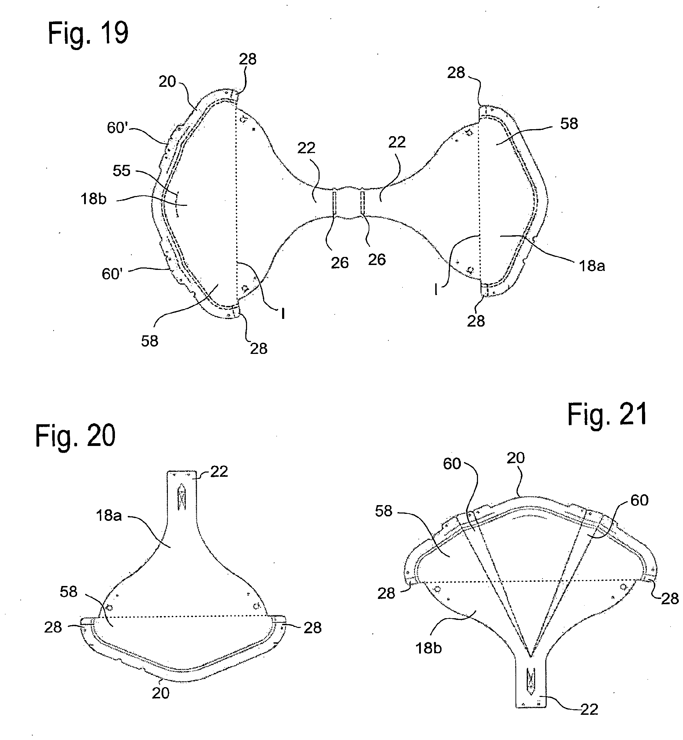

Der Umfangrand 20 jedes der Zuschnittsabschnitte 18a, 18b umschließt zusammen mit einer gedachten Linie I (siehe auch Figuren 19 bis 21) einen Teilbereich 58, wobei die beiden Teilbereiche 58 aneinanderliegend eine Fläche bilden, die in ihrer Form der Öffnung 14 entspricht, aber so groß ist, dass sie die Öffnugn14 vollständig überdecken kann. Dies erlaubt es, mittels der beiden Teilbereiche 58 eine geschlossene Fläche über der Öffnung 14 auszubilden, wenn das Verschlusselement 16 in seiner geschlossenen Stellung ist (siehe Figur 18).

Figur 19 zeigt einen Zuschnitt für das Verschlusselement 16, bei dem die beiden Zuschnittsabschnitte 18a, 18b an ihren langgestreckten Enden 22 einstückig miteinander verbunden sind. Der in Figur 18 rechts außen gelegene Umfangsrand des Zuschnittsabschnitts 18a weist bereits die Kontur der Umfangsnaht 24 auf, die in der Form dem Rand der Öffnung 14 entspricht.

In diesem Beispiel ist der Zuschnittsabschnitt 18b flächenmäßig größer als der Zuschnittsabschnitt 18a, da dort zusätzliches Gewebe 60' für in diesem Beispiel zwei Falten 60 vorgesehen ist. Die Falten 60 werden beginnend vom langgestreckten Ende 22 des Zuschnittsabschnitts 18b gefaltet und mittels einer Quernaht 62 am Umfangsrand 20 permanent fixiert. Auf diese Weise erlangt der Zuschnittsabschnitt 18b eine gekrümmte Form, die nicht vollständig flach ausbreitbar ist. Die Falten 60 sorgen für eine Vorkrümmung und eine Stabilisierung für das Verschlusselement 16 in der geöffneten Stellung.

Im Teilbereich 58 sind die Falten 60 so ausgebildet, dass der Teilbereich 58 mitsamt der Falten 60 flach ausgebreitet werden kann.

Die Figuren 20 und 21 zeigen eine ähnliche Ausführungsform, bei der lediglich die beiden Zuschnittsabschnitte 18a, 18b separat voneinander ausgeschnitten werden und nicht einstückig verbunden sind.

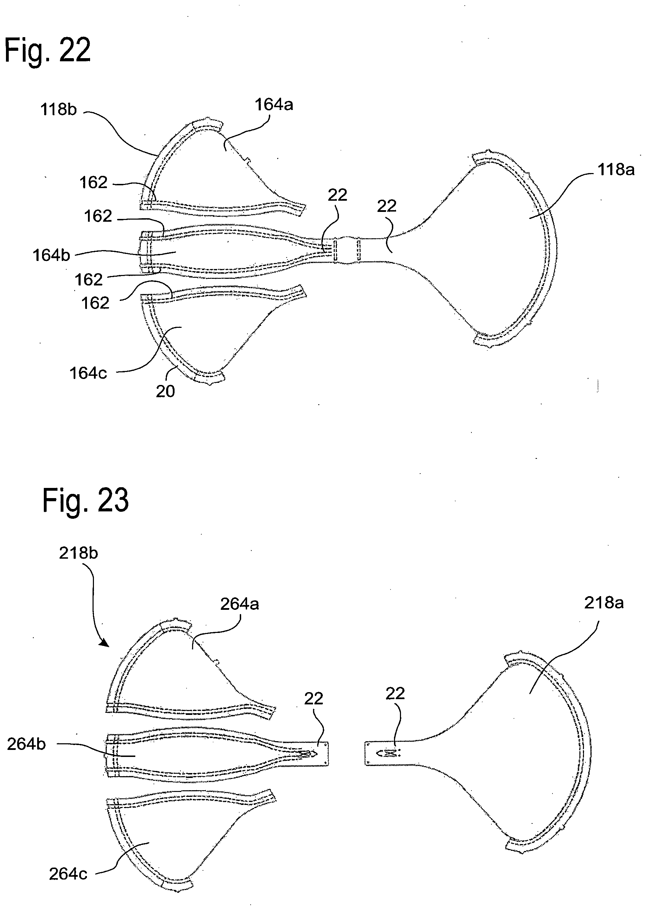

Figur 22 zeigt eine Ausführungsform, bei der der Zuschnittsabschnitt 118b aus insgesamt drei Zuschnittsteilen 164a, 164b und 164c besteht. Anstelle der Falten 60 werden hier Bogennähte 162 verwendet, um die gekrümmte, nicht flach ausbreitbare, dreidimensionale Form des Zuschnittsabschnitts 118b herzustellen. In diesem Beispiel sind alle Verbindungsnähte als gekrümmte Bogennähte ausgebildet, es wäre jedoch auch möglich, einige der Nähte gerade auszuführen, abhängig von der gewünschten Form.

Das mittlere Zuschnittsteil 164b ist hier einstückig mit dem wie in Figur 19 ausgebildeten Zuschnittsabschnitt 118a verbunden. Die restlichen Zuschnittsteile 164a und 164c werden seitlich an dem mittleren Teil 164b angenäht.

Eine Variante, bei der alle drei Zuschnittsteile 264a, 264b, 264c als separate Teile ausgebildet sind, zeigt Figur 23.

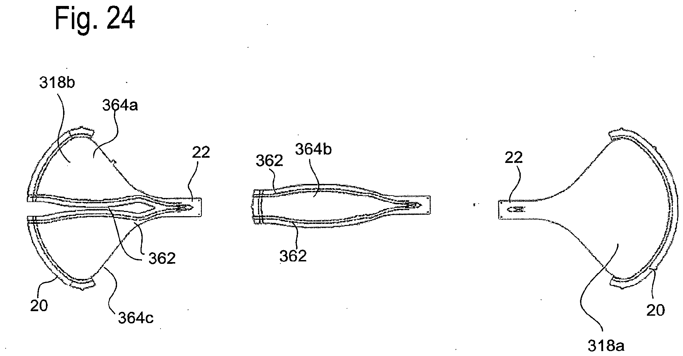

Figur 24 zeigt eine ähnliche Gestaltung, bei der jedoch die Zuschnittsteile 364a und 364c einstückig miteinander ausgebildet sind, während das mittlere Zuschnittsteil 364b als separates Teil gestaltet ist. Auch der dem Zuschnittsabschnitt 18a entsprechende Abschnitt 318a ist hier als separates Zuschnittsteil gebildet.

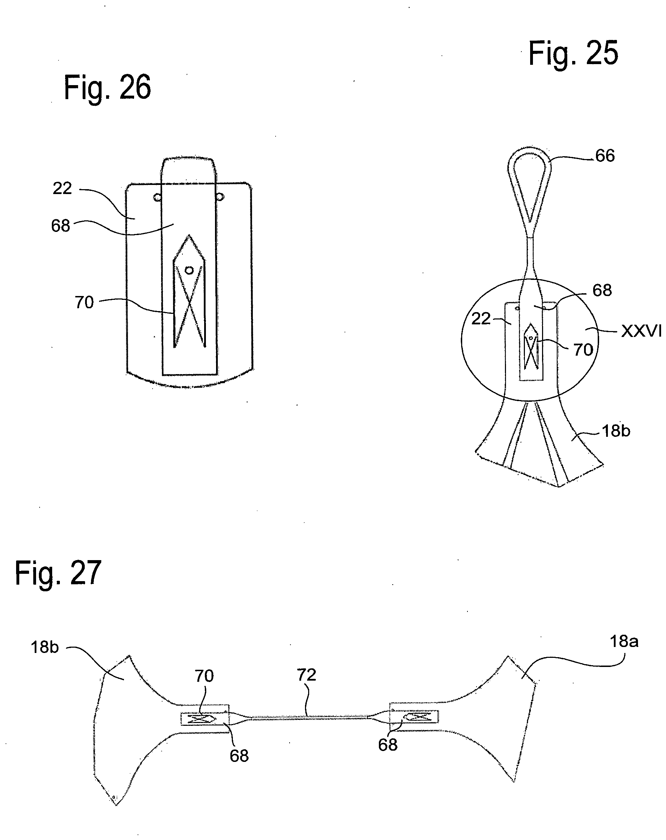

Die Figuren 25 bis 27 zeigen die Befestigung eines Fangbands am Verschlusselement 16. Die beiden Zuschnittsabschnitte 18a, 18b können auf beliebigem Weg hergestellt sein, auch wie für die Zuschnittsabschnitte 118b, 218b und 318b beschrieben.

In Figur 25 ist an den langgestreckten Enden 22 der beiden aufeinandergelegten Zuschnittsabschnitte 18a, 18b eine Schlaufe 66 mit einem daran anschließenden Gewebeabschnitt 68 fixiert, indem der Gewebeabschnitt 68 mit einer speziellen Nahtgeometrie 70 an beiden Zuschnittsabschnitten 18a, 18b gleichzeitig vernäht ist (siehe Figur 26).

Durch die Schlaufe 66 wird später das Fangband 34 gezogen, wenn das Verschlusselement 16 in den Gassackmantel 12 eingesetzt wird.

Figur 27 zeigt hingegen eine Variante, bei der ein Band 72 (das natürlich auch eine Schnur, eine Kordel oder etwas anderes sein kann) mit zwei fest daran fixierten Gewebeabschnitten 68 vorgesehen ist, die jeweils an den langgestreckten Enden 22 jeweils eines der Zuschnittsabschnitte 18a, 18b vernäht sind. Werden die beiden Zuschnittsabschnitte 18a, 18b aneinander fixiert, so bildet das Band 72 automatisch eine Schlaufe, durch die später das Fangband 34 gezogen wird.

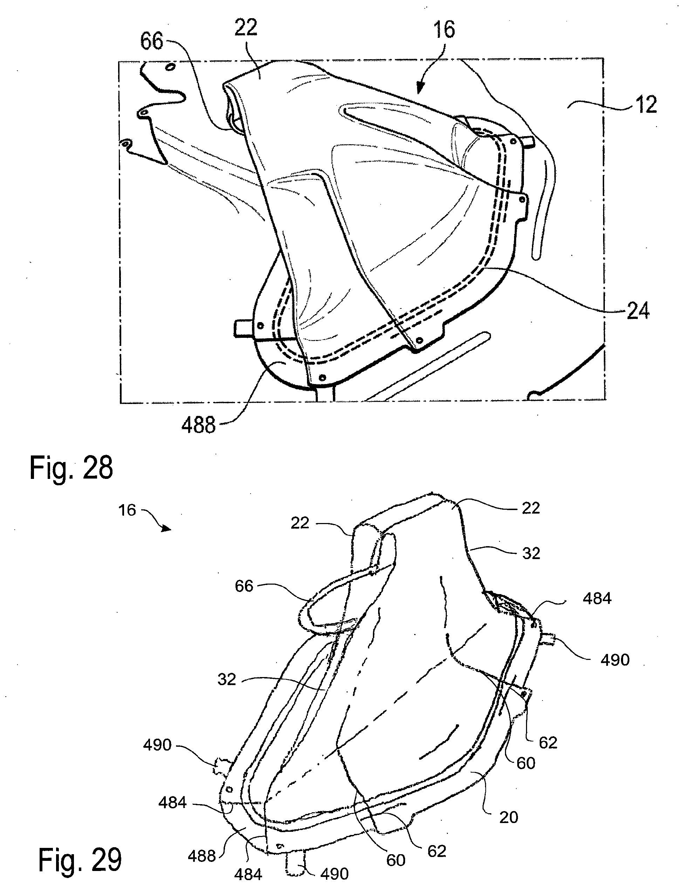

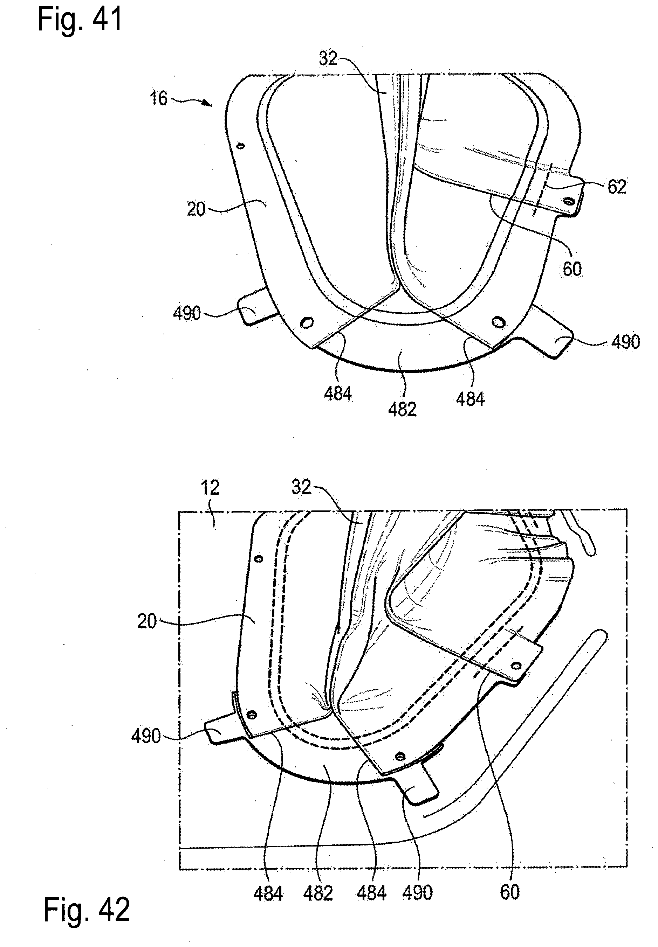

Die Figuren 28 bis 42 zeigen eine weitere Ausführungsform eines Verschlusselements 16, das ähnlich zu dem in den Figuren 17 bis 21 dargestellten aufgebaut ist. Im Gegensatz zu der dort gezeigten Ausführungsform ist jedoch der Umfangsrand 20 im Bereich der schmalen Enden anders gestaltet.

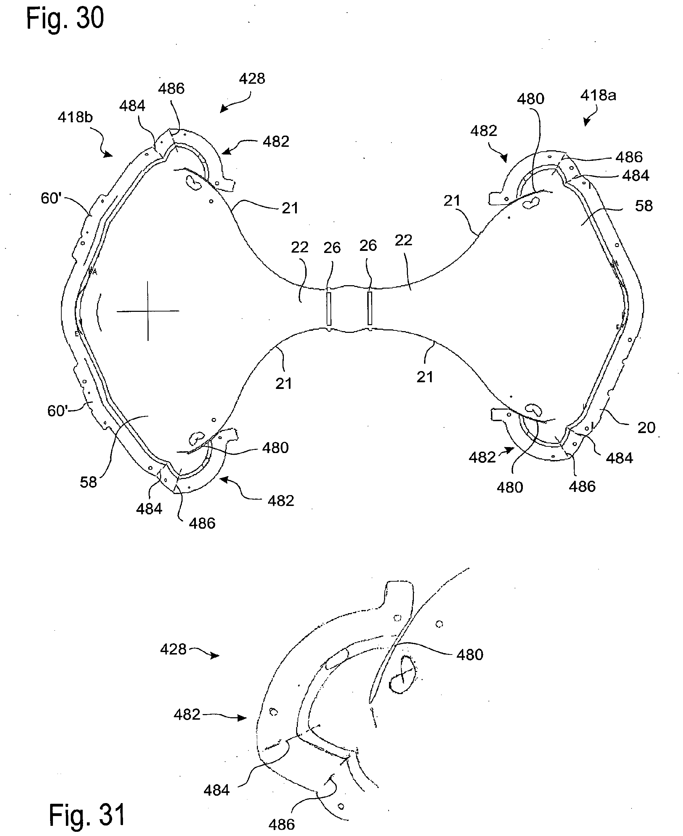

In den vier jeweils am weitesten außen liegenden Randabschnitten 428 der beiden Zuschnittsabschnitte 418a, 418b ist ein Materialüberschluss bereitgestellt. Durch einen in Fortsetzung der Seiten 21 verlaufenden Einschnitt 480 wird ein Gewebelappen 482 gebildet, der entlang des Umfangsrands 20 mit dem restlichen Zuschnitt des Verschlusselements 416 verbunden bleibt. Dies ist gut in den Figuren 30 und 31 zu erkennen.

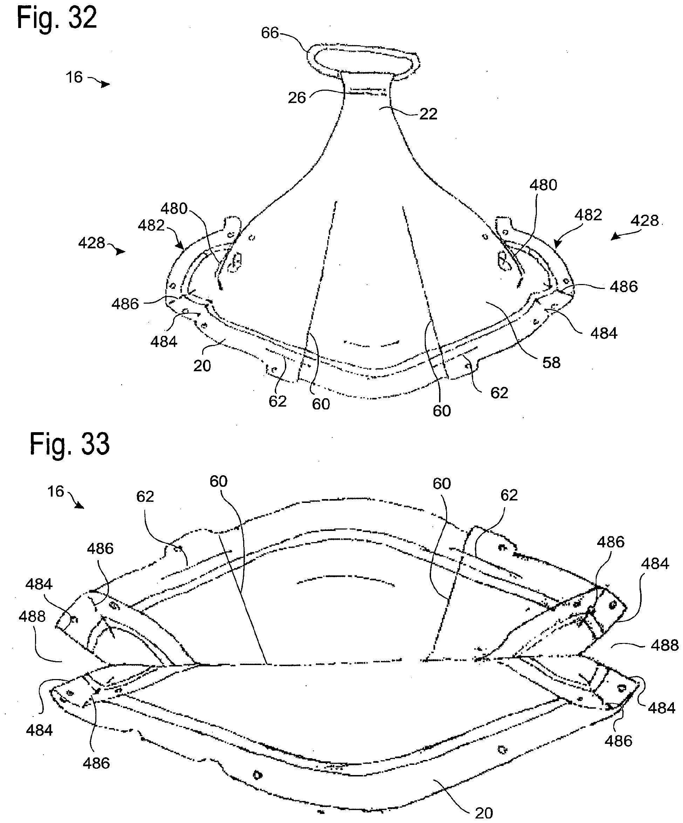

Bei der Vorbereitung des Zuschnitts des Verschlusselements 16 zur Befestigung am Gassack 10 werden zunächst, wie oben beschrieben, die Zuschnittsabschnitte 418a, 418b aufeinandergelegt (nachdem im Abschnitt 418b die beiden Falten 60 gelegt und durch die Randnaht 62 gesichert wurden). Dies zeigt Figur 32.

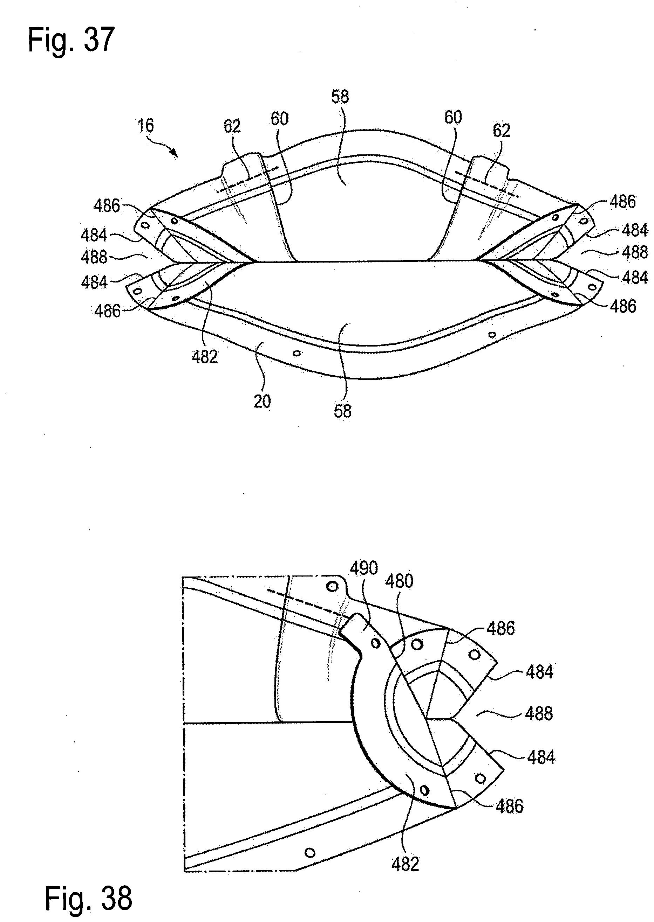

Dann werden die beiden Gewebelappen 482 auf die Innenseite des Verschlusselements 416 geklappt, wobei die beiden unteren Bereiche 58 der Abschnitte 418a, 418b entlang einer ersten Faltkante 484 umgeklappt werden. Die Figuren 33 und 37 zeigen eine Draufsicht von der Unterseite auf das Verschlusselement 16 in diesem Faltzustand.

Im nächsten Schritt werden die beiden Gewebelappen 482 entlang einer zweiten Faltkante 486 umgeklappt, sodass eine Art Zickzackfaltung entsteht. Die beiden Faltkanten 484, 486 verlaufen radial am Umfangsrand 20, wie in den Figuren 30 bis 34 zu erkennen ist.

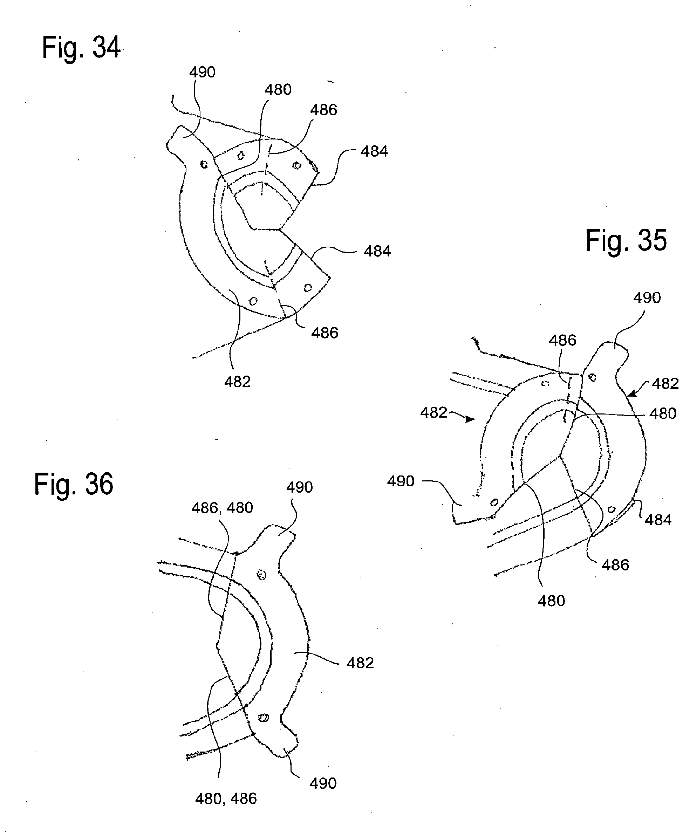

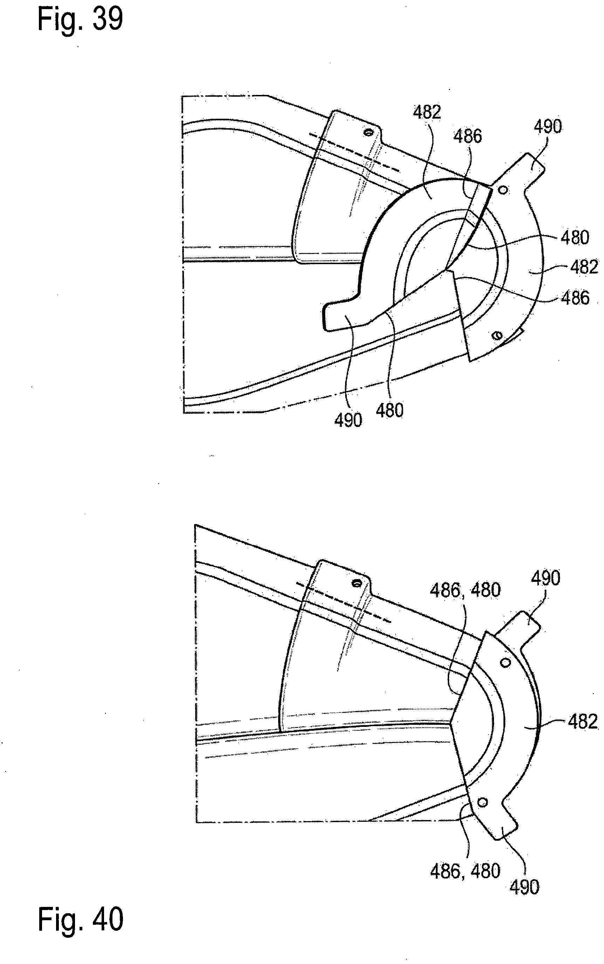

In einem abschließenden Faltschritt werden die beiden Gewebelappen 482 übereinander geschoben, wie dies die Figuren 36 und 40 zeigen. Dabei liegt einer der Ränder des Einschnitts 480 des einen Gewebelappens 482 an der zweiten Faltkante 486 des zweiten Gewebelappens 482 an. Der entlang des Einschnitts 480 verlaufende Rand des zweiten Gewebelappens 482 liegt parallel zur zweiten Faltkante 486 des jeweils anderen Gewebelappens 482.

Auf diese Weise ergibt sich ein spannungsfreier Verlauf des Umfangsrands 20 des Verschlusselements 16, wobei die übereinanderliegenden Gewebelappen 482 die durch das Umfalten der Gewebelappen 482 entstehenden Lücken 488 an den Schmalseiten des Verschlusselements 16 überdecken.

Außerdem sind entlang des Umfangsrand 20 mehrere Sensorlaschen 490 angeordnet, die das automatisierte Erkennen der Position und das Positionieren des so gefalteten, vorgefertigten Verschlusselements 16 auf dem Mantel 12 des Gassacks 10 erlauben. Auf diese Weise kann die Herstellung der Umfangsnaht 24 automatisiert mithilfe einer CNC-Nähoperation erfolgen.

Die Faltung und die übereinanderliegenden Gewebelappen 482 bewirken eine so hohe Stabilität, dass auf eine separate Verbindung der Abschnitte 418a, 418b des Verschlusselements 416 entlang des Umfangsrands 20 vor der Befestigung am Gassack 10 verzichtet werden kann. Natürlich ist es auch möglich, aus Gründen einer einfachen Verarbeitung die Gewebelappen 482 jeweils aneinander und/oder am Umfangsrand 20 der Zuschnittsabschnitte 418a, 418b zu fixieren.

## Patentansprüche

1. Gassack mit wenigstens einer in einem Gassackmantel (12) vorgesehenen Öffnung (14), an die ein Verschlusselement (16) angesetzt ist, wobei das Verschlusselement wenigstens eine Ausströmöffnung aufweist. wobei an dem Verschlusselement (16) ein Fangband (34) angreift, über das das Verschlusselement (16) in einer geschlossenen Stellung gehalten werden kann, und wobei das Fangband (34) an einer pyrotechnischen Freigabevorrichtung (36) fixiert ist, die mit einer Steuereinheit (40) gekoppelt ist, die ein Lösen des Fangbands (34) in Abhängigkeit von insassen- und/oder fahrzeugbezogenen Parametern veranlasst, wodurch das Verschlusselement (16) in eine geöffnete Stellung gelangt, wobei das Verschlusselement (16) wenigstens zwei übereinanderliegende, entlang eines Umfangsrands (20) zumindest teilweise miteinander verbundene Zuschnittsabschnitte (18a - 418a, 18b - 418b) aufweist, **dadurch gekennzeichnet, dass** wenigstens einer der Zuschnittsabschnitte (18b - 418b) eine oder mehrere abgenähte Falten (60) aufweist und/oder aus mehreren Zuschnittsteilen (164b - 364b) mit wenigstens einer Bogennaht (162 - 362) zusammengesetzt ist, sodass der Zuschnittsabschnitt (18b - 418b) nicht flach ausbreitbar ist und eine gewölbt vorgeformte Form aufweist, sodass eine Stabilisierung der Form des Verschlusselements in einer geöffneten Stellung erreicht wird..

2. Gassack nach Anspruch 1, **dadurch gekennzeichnet, dass** die Zuschnittsabschnitte (418a, 418b) durch eine Befestigung des Umfangsrand (20) am Mantel (12) des Gassacks (10) aneinander fixiert sind.

3. Gassack nach einem der vorhergehenden Ansprüche, **dadurch gekennzeichnet, dass** das Verschlusselement (16) zwei Zuschnittsabschnitte (418a, 418b) aufweist, die jeweils einen Umfangsrandabschnitt umfassen, wobei an jedem freien Ende der Umfangsrandabschnitte ein Gewebelappen (482) ausgebildet ist, der durch einen Einschnitt (480) teilweise vom jeweiligen Zuschnittsabschnitt (418a, 418b) abgeteilt ist.

4. Gassack nach Anspruch 3, **dadurch gekennzeichnet, dass** die Gewebelappen (482) entlang von zwei nebeneinander angeordneten radialen Faltlinien (484, 486) gegenüber der Fläche des jeweiligen Zuschnittsabschnitt (418a, 418b) abgeklappt ist, sodass ein in einer Ebene umlaufender Umfangsrand (20) gebildet ist.

5. Gassack nach einem der vorhergehenden Ansprüche, **dadurch gekennzeichnet, dass** am Umfangsrand (20) des Verschlusselements (16) radial vom Umfangsrand (20) abstehende Sensorlaschen (490) vorgesehen, die eine automatisierte Positionserkennung ermöglichen.

6. Gassack nach einem der vorhergehenden Ansprüche, **dadurch gekennzeichnet, dass** die wenigstens eine Ausströmöffnung (32) als eine seitliche Ausströmöffnung (32) ausgebildet ist.

7. Gassack nach einem der vorhergehenden Ansprüche, **dadurch gekennzeichnet, dass** am Fangband (34) eine Verriegelungsstruktur (42) vorgesehen ist, die ab einem vorbestimmten Entfaltungszustand des Gassacks (10) eine Rückbewegung des Verschlusselements (16) verhindert.

8. Gassack, nach einem der vorhergehenden Ansprüche, **dadurch gekennzeichnet, dass** der Umfangsrand (20) des Verschlusselements (16) umlaufend um den Rand der Öffnung (14) so befestigt ist, dass der Rand der Öffnung (14) eine umfangsmäßig umlaufende Blende (54) bildet, die radial über den Umfangsrand (20) des Verschlusselements (16) nach innen vorsteht, wobei die Querschnittsfläche der Öffnung (14) in etwa rautenförmig ist..

9. Gassack nach einem der vorhergehenden Ansprüche, **dadurch gekennzeichnet, dass** jeder der Zuschnittsabschnitte (18a - 418a, 18b - 418b) einen Teilbereich (58) aufweist, der sich vom Umfangsrand (20) in die Fläche des Zuschnittsabschnitts (18a - 418a, 18b - 418b) erstreckt und sich die beiden Teilbereiche (58) in der geschlossenen Stellung des Verschlusselements (16) zu einer Fläche ergänzen, die in ihrer Form der Querschnittsfläche der Öffnung (14) im Gassackmantel (12) entspricht.

10. Gassack nach einem der vorhergehenden Ansprüche, **dadurch gekennzeichnet, dass** das Verschlusselement (16) in der geöffneten Stellung eine sich verjüngende Hohlkörperform, insbesondere eine Kegelform oder Trichterform, hat, und aus zwei übereinanderliegenden Zuschnittsabschnitten (18a - 418a, 18b - 418b) besteht, die jeweils etwa keulen- oder glockenförmig gestaltet sind, wobei an einem langgestreckten Ende (22) jedes der Zuschnittsabschnitte (18a - 418a, 18b - 418b) das Fangband (34) ansetzt und an dem dem langgestreckten Ende (22) gegenüberliegenden Umfangsrand (20) der Zuschnittsabschnitt (18a - 418a, 18b - 418b) am Gassackmantel (12) befestigt ist, wobei die Zuschnittsabschnitte (18a - 418a, 18b - 418b) miteinander am langgestreckten Ende (22) sowie jeweils an einem Randbereich (28) im Bereich des Umfangsrands (20) vernäht sind, wobei die Zuschnittsabschnitte (18a - 418a, 18b - 418b) über einen Großteil der zwischen dem langgestreckten Ende (22) und dem Umfangsrand (20) liegenden Seitenränder (21) nicht verbunden sind, sodass zwei seitliche Ausströmöffnungen (32) im Verschlusselement (16) gebildet sind.

11. Gassack nach Anspruch 10, **dadurch gekennzeichnet, dass** die beiden Zuschnittsabschnitte (18a, 18b; 118a, 118b; 418a, 418b) an ihren langgestreckten Enden (22) einstückig miteinander verbunden sind.

12. Gassack nach einem der Ansprüche 6 bis 11, **dadurch gekennzeichnet, dass** zur Befestigung des Fangbands (34) am Verschlusselement (16) eine Schlaufe (66, 72) vorgesehen ist, an der das Fangband (34) angreift.

13. Gassack nach einem der vorhergehenden Ansprüche, **dadurch gekennzeichnet, dass** das Verschlusselement (16) in einer anfänglichen Entfaltungsphase des Gassacks (10) in seiner geschlossenen Stellung innen im Gassackmantel (12) liegt.

14. Verfahren zum Betrieb eines Fahrzeuginsassenschutzsystems mit einem Gassack (10) nach einem der vorhergehenden Ansprüche, wobei die mit der Freigabevorrichtung (36) gekoppelte Steuereinheit (40) das Lösen des Fangbands (34) bereits zu Beginn des Entfaltungsvorgangs veranlasst, wenn eine mit der Steuereinheit (40) verbundene Sensorik vorbestimmte insassen- und/oder fahrzeugbezogene Parameter erkennt.

15. Verfahren zum Betrieb eines Fahrzeuginsassenschutzsystems mit einem Gassack (10) nach einem der Ansprüche 1 bis 12, wobei in einem anfänglichen Entfaltungszustand des Gassacks (10) das Verschlusselement (16) in seiner geöffneten Stellung ist,
wobei mit zunehmender Entfaltung des Gassacks (10) das Verschlusselement (16) in das Innere des Gassackmantels (12) in die geschlossene Stellung hineingezogen wird und auf das Fangband (34) über dessen Fixierung ab einem vorbestimmten Entfaltungszustand ein ausreichender Zug auf das Verschlusselement (16) ausgeübt wird, um das Verschlusselement (16) in der geschlossenen Stellung zu halten und
wobei die Freigabevorrichtung (36) in Abhängigkeit von vorbestimmten insassen- und/oder fahrzeugbezogenen Parametern das Fangband (34) lösen kann, sodass das Verschlusselement (16) durch den Innendruck des Gassacks (10) wieder in seine geöffnete Stellung bewegt wird.

## Claims

1. An airbag comprising at least one opening (14) provided in an airbag shell (12), to which a closure element (16) is attached, the closure element having at least one discharge orifice, wherein a tether (34) via which the closure element (16) can be maintained in a closed position acts on the closure element (16), and wherein the tether (34) is fixed to a pyrotechnical release device (36) which is coupled to a control unit (40) causing loosening of the tether (34) as a function of parameters relating to the occupant and/or the vehicle, thus causing the closure element (16) to arrive at an opened position, wherein the closure element (16) includes at least two overlying cut portions (18a - 418a, 18b - 418b) interconnected at least in portions along a peripheral edge (20), **characterized in that** at least one of the cut portions (18b - 418b) includes one or more stitched-down folds (60) and/or is composed of plural cut portions (164b - 364b) having at least one curved seam (162 - 362) so that the cut portion (18b - 418b) cannot be flatly spread and has a preformed curved shape so that a stabilization of the shape of the closure element is achieved in an open position.

2. The airbag according to claim 1, **characterized in that** the cut portions (418a, 418b) are fixed to each other by a fixation of the peripheral edge (20) on the shell (12) of the airbag (10).

3. The airbag according to any one of the preceding claims, **characterized in that** the closure element (16) includes two cut portions (418a, 418b) each comprising a peripheral edge portion, wherein on each free end of the peripheral edge portions a fabric lug (482) is formed which is partly separated from the respective cut portion (418a, 418b) by a notch (480).

4. The airbag according to claim 3, **characterized in that** the fabric lug (482) is folded along two juxtaposed radial folding lines (484, 486) vis-à-vis the surface of the respective cut portion (418a, 418b) so that a peripheral edge (20) being circumferential in a plane is formed.

5. The airbag according to any one of the preceding claims, **characterized in that** sensor tabs (490) are provided on the peripheral edge (20) of the closure element (16) which project radially from the peripheral edge (20) and enable automated position detection.

6. The airbag according to any one of the preceding claims, **characterized in that** the at least one discharge orifice (32) is formed as a lateral discharge orifice (32).

7. The airbag according to any one of the preceding claims, **characterized in that** a locking structure (42) is provided on the tether (34), which prevents a return movement of the closure element (16) from a predetermined deployment state of the airbag (10).

8. The airbag according to any one of the preceding claims, **characterized in that** the peripheral edge (20) of the closure element (16) is fastened circumferentially about the edge of the opening (14) so that the edge of the opening (14) forms a peripherally circumferential diaphragm (54) projecting inwardly radially from the peripheral edge (20) of the closure element (16), wherein the cross-sectional area of the opening (14) is approximately diamond-shaped.

9. The airbag according to any one of the preceding claims, **characterized in that** each of the cut portions (18a - 418a, 18b - 418b) includes a subarea (58) which extends from the peripheral edge (20) into the surface of the cut portion (18a - 418a, 18b - 418b) and in the closed position of the closure element (16) the two subareas (58) complement each other to form a surface which corresponds as to its shape to the cross-sectional area of the opening (14) within the airbag shell (12).

10. The airbag according to any one of the preceding claims, **characterized in that** the closure element (16) in the opened position has a tapered hollow shape, especially a cone shape or funnel shape and consists of two overlying cut portions (18a - 418a, 18b - 418b) each being approximately club-shaped or bell-shaped, wherein at one elongate end (22) of each of the cut portions (18a - 418a, 18b - 418b) a tether (34) is attached and at the peripheral edge (20) opposed to the elongate end (22) the cut portion (18a - 418a, 18b - 418b) is fastened to the airbag shell (12), wherein the cut portions (18a - 418a, 18b - 418b) are sewn up with each other on the elongate end (22) as well as on each edge area (28) in the area of the peripheral edge (20), wherein the cut portions (18a - 418a, 18b - 418b) are not connected along a major part of the side edges (21) located between the elongate end (22) and the peripheral edge (20) so that two lateral discharge orifices (32) are formed in the closure element (16).

11. The airbag according to claim 10, **characterized in that** the two cut portions (18a, 18b; 118a, 118b; 418a, 418b) are joined together in one piece at their elongate ends (22).

12. The airbag according to any one of the claims 6 to 11, **characterized in that** a loop (66, 72) which the tether (34) acts on is provided for fastening the tether (34) to the closure element (16).

13. The airbag according to any one of the preceding claims, **characterized in that** the closure element (16) is located in its closed position inside of the airbag shell (12) during an initial deployment phase of the airbag (10).

14. A method of operating a vehicle occupant protection system comprising an airbag (10) according to any one of the preceding claims, wherein the control unit (40) coupled to the release device (36) causes loosening of the tether (34) already at the beginning of the deployment operation, when a sensor system coupled to the control unit (40) recognizes predetermined parameters relating to the occupant and/or vehicle.

15. The method of operating a vehicle occupant protection system comprising an airbag (10) according to any one of the claims 1 to 12, wherein in an initial deployment state of the airbag (10) the closure element (16) is provided in its open position,
wherein upon increasing deployment of the airbag (10) the closure element (16) is pulled into the interior of the airbag shell (12) into the closed position and from a predetermined deployment state sufficient tension is exerted on the closure element (16) via fixation of the tether (34) so as to maintain the closure element (16) in the closed position and
wherein the release device (36) may loosen the tether (34) depending on predetermined parameters relating to the occupant and/or to the vehicle so that the closure element (16) is moved into its opened position again by the internal pressure of the airbag (10).

## Revendications

1. Coussin gonflable avec au moins une enveloppe de coussin gonflable (12) muni d'une ouverture (14) à laquelle est fixé un élément de fermeture (16), pour lequel l'élément de fermeture comporte au moins une ouverture de sortie, pour lequel une attache (34) met en prise l'élément de fermeture (16), par l'intermédiaire duquel l'élément de fermeture (16) peut être maintenu dans une position fermée, et pour lequel l'attache (34) est fixé à un moyen de libération pyrotechnique (36), lequel es couplé à une unité de commande (40), qui détermine une libération de l'attache (34) en fonction de paramètres liés à l'occupant et/ou au véhicule,
grâce à quoi l'élément de fermeture (16) passe dans une position ouverte, pour lequel l'élément de fermeture (16) comprend au moins deux portions (18a - 418a, 18b - 418b) au moins partiellement interconnectés, superposées le long d'un bord périphérique (20), **caractérisé en ce qu** 'au moins une des portions (18b - 418b) comporte un ou plusieurs plis cousus (60) et / ou une pluralité de sections (164b - 364b) sont assemblées par au moins une couture en forme d'arc (162 - 362), de telle sorte que la portion (18b - 418b) n'est pas étalable à plat et présente une forme préformée incurvée, de sorte qu'une stabilisation de la forme de l'élément de fermeture est obtenue dans une position ouverte.

2. Coussin gonflable selon la revendication 1, **caractérisé en ce que** les portions (418a, 418b) sont fixées l'une à l'autre en fixant le bord périphérique (20) sur l'enveloppe (12) du coussin gonflable (10).

3. Coussin gonflable selon l'une des revendications précédentes, **caractérisé en ce que** l'élément de fermeture (16) comporte deux portions (418a, 418b), lesquelles comportent chacune un bord périphérique, pour lequel à chaque extrémité libre des bords périphériques est formé un rabat en tissu (482), qui au travers d'une découpe (480) est partiellement séparé de chaque portion respective (418a, 418b).

4. Coussin gonflable selon la revendication 3, **caractérisé en ce que** le rabat en tissu (482) est plié le long de deux lignes de pliage radiales adjacentes (484, 486) par rapport à la surface de chaque portion respective (418a, 418b), de sorte que dans un plan est formé un bord périphérique circonférentiel (20).

5. Coussin gonflable selon l'une des revendications précédentes, **caractérisé en ce que** sur le bord périphérique (20) de l'élément de fermeture (16) sont prévus radialement à partir du bord périphérique (20) des languettes capteur (490), qui permettent une détection de position automatisée.

6. Coussin gonflable selon l'une des revendications précédentes, **caractérisé en ce que** la ou les ouvertures de sortie (32) sont conçues comme une ouverture de sortie latérale (32).

7. Coussin gonflable selon l'une des revendications précédentes, **caractérisé en ce que** sur l'attache (34) est prévue une structure de blocage (42) qui empêche un mouvement de retour de l'élément de fermeture (16) à partir d'un état de déploiement prédéterminé du coussin gonflable (10).

8. Coussin gonflable selon l'une des revendications précédentes, **caractérisé en ce que** le bord périphérique (20) de l'élément de fermeture (16) est fixé autour du bord de l'ouverture (14), de sorte que le bord de l'ouverture (14) présente une ouverture circonférentielle (54), qui fait saillie radialement vers l'intérieur au-delà du bord périphérique (20) de l'élément de fermeture (16), pour lequel la section transversale de l'ouverture (14) est approximativement en forme de losange.

9. Coussin gonflable selon l'une des revendications précédentes, **caractérisé en ce que** chacune des portions (18a-418a, 18b-418b) présente une région partielle (58), qui s'étend depuis le bord périphérique (20) à la surface de la portion (18a-418a, 18b-418b) et pour lequel les deux sous-zones (58) dans la position fermée de l'élément de fermeture (16), se complètent en une surface, qui dans sa forme correspond à la section transversale de l'ouverture (14) de l'enveloppe du coussin gonflable (12).

10. Coussin gonflable selon l'une quelconque des revendications précédentes, **caractérisé en ce que** l'élément de fermeture (16) dans la position ouverte, a un à la forme de corps creux se rétrécissant, en particulier une forme de cône ou une forme d'entonnoir, et constitué de deux portions superposées (18a - 418a, 18b 418b), chacune étant conçue approximativement en forme de dôme ou de cloche, pour lequel sur une extrémité allongée (22) de chacune des portions (18a - 418a, 18b - 418b) vient l'attache (34) et à l'extrémité allongée (22) à l'opposé du bord périphérique (20) la portion (18a - 418a, 18b - 418b) est fixée à l'enveloppe du coussin gonflable (12), pour lequel les portions (18a - 418a, 18b - 418b) sont cousues ensemble à l'autre à l'extrémité allongée (22) chacune à une portion de bord (28) dans la région du bord périphérique (20), pour lequel les portions (18a -418a, 18b - 418b) ne sont pas reliées sur une majeure partie située entre les extrémités allongées (22) et le bord périphérique (20) des bords latéraux (21), de sorte que deux ouvertures de sortie latérales (32) sont formées dans l'élément de fermeture (16).

11. Coussin gonflable selon la revendication 10, **caractérisé en ce que** les deux portions (18a, 18b, 118a, 118b, 418a, 418b) sont solidaires l'une de l'autre au niveau de leurs extrémités allongées (22).

12. Coussin gonflable selon l'une des revendications 6 à 11, **caractérisé en ce que** est prévue une boucle (66, 72) pour fixer l'attache (34) à l'élément de fermeture (16), sur laquelle l'attache (34) s'engage.

13. Coussin gonflable selon l'une des revendications précédentes, **caractérisé en ce que** l'élément de fermeture (16) est dans une phase de déploiement initiale du coussin gonflable (10) dans sa position fermée à l'intérieur de l'enveloppe du coussin gonflable (12).

14. Procédé de fonctionnement d'un système de protection d'occupant de véhicule avec un coussin gonflable (10) selon l'une quelconque des revendications précédentes, pour lequel le dispositif de libération (36) couplé à l'unité de commande (40) permet la libération de l'attache (34) au début du processus de déploiement, quand il dectecte avec l'unité de commande (40) les paramètres prédéterminés relatifs à l'occupant et/ou au véhicule.

15. Procédé de fonctionnement d'un système de protection d'occupant d'un véhicule comportant un coussin gonflable (10) selon l'une quelconque des revendications 1 à 12, dans lequel, dans un état de déploiement initial du coussin gonflable (10), l'élément de fermeture (16) est dans sa position ouverte,
pour lequel, avec un déploiement progressif du coussin gonflable (10), l'élément de fermeture (16) est tiré à l'intérieur de l'enveloppe du coussin gonflable (12) en position fermée et est exercée sur l'attache (34) à partir d'un état de déploiement prédéterminé un traction suffisante de l'élement de fermeture (16), pour maintenir l'élément de fermeture (16) en position fermée et
pour lequel le dispositif de libération (36) en réponse à des paramètres prédéterminés liés à l'occupant et/ou au véhicule, peut libérer l'attache (34), de sorte que l'élément de fermeture (16) par la pression interne du coussin gonflable (10) est ramené dans sa position ouverte.
